# EUROPEAN PATENT APPLICATION

(11) **EP 4 749 329 A1**
(43) Date of publication of application: **27.05.2026**
(21) Application number: 23945501.7
(22) Date of filing: 20.07.2023
(51) Int. Cl.: G01S 17/93, G01J 5/02

(54) **SCENARIO IDENTIFICATION METHOD, CONTROL APPARATUS, MOVABLE PLATFORM, AND STORAGE MEDIUM**

(71) Applicant: SZ DJI Technology Co., Ltd., 518000 Shenzhen (CN)
(72) Inventor: REN, Wei, Shenzhen, Guangdong 518000 (CN); SONG, Yufu, Shenzhen, Guangdong 518000 (CN); ZHANG, Zhou, Shenzhen, Guangdong 518000 (CN)
(74) Representative: Appelt, Christian W.
(86) International application number: PCT/CN2023/108448
(87) International publication number: WO 2025/015613

(57) **Abstract**

A scene identification method, a control device, a movable platform and a computer-readable storage medium are provided, the method comprises: controlling a probing device to emit probing light to detect a current scene; the probing device comprises an area-array photoelectric sensor; when the area-array photoelectric sensor receives a reflected echo of the probing light, obtaining multiple signals output by multiple photoelectric units of the area-array photoelectric sensor; identifying whether the current scene is a target scene based on signal parameters of the multiple signals, where the target scene at least comprises a water surface scene. The scene identification steps are simple, facilitating rapid acquisition of scene identification results.

## Description

### Technical Field

This application relates to the field of scene identification technology, specifically to a scene identification method, control device, movable platform, and computer-readable storage medium.

### Background Art

With the continuous advancement of technology, movable platforms are gradually becoming essential auxiliary tools in people's lives and work. A movable platform refers to a machine platform with autonomous mobility, capable of moving freely and performing tasks in various environments.

During the movement of a movable platform, accurate identification of the current scene is one of the critical factors in ensuring safe navigation. In the process of a movable platform's operation, scene identification is typically achieved through the driver's visual observation or with the aid of visual sensors. However, in scenarios such as autonomous driving or situations where visual identification fails to identify certain scene types, there is a lack of effective methods for identifying the scene type.

### Summary of the Invention

In view of the foregoing, one of the objects of this application is to provide a scene identification method, control device, movable platform, and computer-readable storage medium.

In a first aspect, some embodiments of this application provide a scene identification method, comprising: controlling a detection device to emit probing light to detect a current scene, where the detection device comprises an area-array photoelectric sensor; in response to the area-array photoelectric sensor receiving a reflected echo of the probing light, obtaining a plurality of signals output by a plurality of photoelectric units of the area-array photoelectric sensor; and identifying whether the current scene is a target scene based on signal parameters of the plurality of signals, where the target scene at least comprises a water surface scene.

In a second aspect, some embodiments of this application provide a scene identification method, comprising: controlling a detection device to emit probing light to detect a current scene, where the detection device comprises an area-array photoelectric sensor; in response to the area-array photoelectric sensor receiving a reflected echo of the probing light, obtaining a plurality of signals output by a plurality of photoelectric units of the area-array photoelectric sensor; and identifying whether the current scene is a target scene based on a distribution and/or variation of signal parameters of the plurality of signals
In a third aspect, some embodiments of this application provide a scene identification method, comprising: obtaining an echo signal of a reflective surface in a current scene, where the echo signal comprises an optical signal reflected back from the reflective surface by probing light actively emitted by a detection device, or an electrical signal converted from the optical signal; determining reflection information of the reflective surface based on the echo signal, where the reflection information comprises at least one of distribution information or variation information of signal parameters of a plurality of echo signals of the reflective surface; and determining whether the current scene is a target scene based on the reflection information of the reflective surface, where the target scene at least comprises a water surface scene.

In a fourth aspect, some embodiments of this application provide a control device, the control device comprises: a memory for storing executable instructions; one or more processors, where the one or more processors are configured individually or collectively to, when executing the executable instructions, perform the method according to any one of the first, second, or third aspect.

In a fifth aspect, some embodiments of this application provide a movable platform, the movable platform comprises: a body; a drive system, mounted on the body, configured to provide power for the movable platform; a detection device, mounted on the body, configured to emit probing light to detect a current scene; and the control device according to the fourth aspect.

In a sixth aspect, some embodiments of this application provide a computer-readable storage medium, the computer-readable storage medium stores executable instructions, which, when executed by a processor, implement the method according to any one of the first, second, or third aspect.

The embodiments of this application enable target scene identification based on signal parameters of multiple signals output by multiple photoelectric units of an area-array photoelectric sensor. For example, it can identify whether the current scene is a water surface scene by analyzing the distribution and/or variation of the signal parameters of multiple signals. This application addresses the issue of visual sensors being unable to accurately identify water surface scenes, thereby improving the accuracy of scene identification and the safety of movable platforms during movement. The embodiments and beneficial effects will be further elaborated below.

### Brief Description of the Drawings

To more clearly illustrate the technical solutions in the embodiments of this application, a brief introduction to the drawings used in the description of the embodiments is provided below. Obviously, the drawings described below are merely some embodiments of this application. For a person of ordinary skill in the art, other drawings can be obtained based on these drawings without creative effort.
FIG. 1 is a schematic structural diagram of a movable platform provided by some embodiments of this application;
FIG. 2 is a schematic structural diagram of a power system of an unmanned aerial vehicle (UAV) provided by some embodiments of this application;
FIG. 3A is a schematic structural diagram of a detection device provided by some embodiments of this application;
FIG. 3B is a schematic diagram of a detection scene of a detection device provided by some embodiments of this application;
FIG. 4 is a schematic diagram of an application scenario of a movable platform provided by some embodiments of this application;
FIG. 5 is a schematic diagram of an application scenario of a movable platform provided by some embodiments of this application;
FIG. 6 is a schematic flowchart of a scene identification method provided by some embodiments of this application;
FIG. 7 is a schematic diagram of multiple photoelectric units of an area-array photoelectric sensor provided by some embodiments of this application;
FIG. 8 is a schematic flowchart of a scene identification method provided by some embodiments of this application;
FIG. 9 is a schematic flowchart of a scene identification method provided by some embodiments of this application; and
FIG. 10 is a schematic structural diagram of a control device provided by some embodiments of this application.

### Description of the Embodiments

The technical solutions in the embodiments of this application will be described clearly and completely below in conjunction with the accompanying drawings. It is evident that the described embodiments are only a portion of the embodiments of this application, not all of them. Based on the embodiments in this application, all other embodiments obtained by a person of ordinary skill in the art without creative effort shall fall within the scope of protection of this application.

During the movement of a movable platform, accurate identification of the current scene is one of the critical factors in ensuring safe navigation. By accurately perceiving and understanding the surrounding environment, the movable platform can make timely decisions and adjustments. Currently, scene identification is typically achieved through the driver's visual observation or with the aid of visual sensors. However, in low-light or high-light scenes, or in scenes with no texture or weak texture, relying on visual sensors often fails to accurately identify the scene type, resulting in a lack of effective methods for identifying the scene type.

To address the issues in the related art, the embodiments of this application provide a scene identification method that utilizes a detection device for scene identification. First, the detection device can be controlled to emit probing light to detect the current scene, where the detection device includes an area-array photoelectric sensor. When the area-array photoelectric sensor receives the reflected echo of the probing light, multiple signals output by multiple photoelectric units of the area-array photoelectric sensor are acquired. Based on the signal parameters of these multiple signals, it is determined whether the current scene is a target scene. This method enables scene identification through non-visual means, improving the accuracy of scene identification and the safety of movable platforms during movement. Moreover, it only requires signal parameters for scene judgment, making the identification process simple and facilitating rapid acquisition of scene identification results. Furthermore, the target scene includes at least a water surface scene. This method can directly and quickly determine whether the current scene is a water surface scene based on the signal parameters of multiple signals, addressing the problem of visual sensors being unable to accurately identify water surface scenes.

To address the issues in the related art, the embodiments of this application provide another scene identification method that utilizes a detection device for scene identification. First, the detection device can be controlled to emit probing light to detect the current scene, where the detection device includes an area-array photoelectric sensor. When the area-array photoelectric sensor receives the reflected echo of the probing light, multiple signals output by multiple photoelectric units of the area-array photoelectric sensor can be acquired. Based on the distribution and/or variation of the signal parameters of these multiple signals, it is determined whether the current scene is a target scene. This method achieves scene identification by actively emitting a probing light source, improving the accuracy of scene identification and the safety of movable platforms during movement. Moreover, it only requires the distribution and/or variation of signal parameters for scene judgment, making the identification process simple and facilitating rapid acquisition of scene identification results.

To address the issues in the related art, the embodiments of this application provide yet another scene identification method that utilizes a detection device for scene identification. First, the detection device actively emits probing light and then acquires the echo signals reflected back from the reflective surface of the current scene. Based on the echo signals, the reflection information of the reflective surface is determined, where the reflection information includes at least one of the following: distribution information or variation information of the signal parameters of multiple echo signals from the reflective surface. Based on the reflection information of the reflective surface, it is determined whether the current scene is a target scene, where the target scene includes at least a water surface scene. This method achieves scene identification through non-visual means, improving the accuracy of scene identification and the safety of movable platforms during movement. It only requires the distribution information and/or variation information of the signal parameters of multiple echo signals from the reflective surface to directly and quickly determine whether the current scene is a water surface scene, addressing the problem of visual sensors being unable to accurately identify water surface scenes. Additionally, the identification process is simple, enabling rapid acquisition of scene identification results for subsequent fast decision-making processes of the movable platform.

The scene identification method provided by the embodiments of this application can be executed by a control device.

On one hand, the control device can be a computer software product integrated into a movable platform. This computer software product includes an application capable of executing the scene identification method provided by the embodiments of this application.

On the other hand, the control device includes a processor. When specifically executing the scene identification method, the processor can perform the method by invoking an executable program stored in memory or through a logic operation circuit.

The control device can execute the scene identification method in the background, or it can present the process to the user through a graphical interface, or it can perform part of the process in the background while displaying another part to the user. Additionally, during the execution of the scene identification method, the control device can operate entirely autonomously, or it can operate partially autonomously with some human intervention.

The control device can be integrated into a movable platform. Movable platforms include, but are not limited to, aircraft, unmanned aerial vehicles, vehicles, mobile carts, or mobile robots. Among these, unmanned aerial vehicles include, but are not limited to, unmanned helicopters, unmanned fixed-wing aircraft, unmanned multi-rotor aircraft, unmanned gliders, unmanned airships, or unmanned balloons.

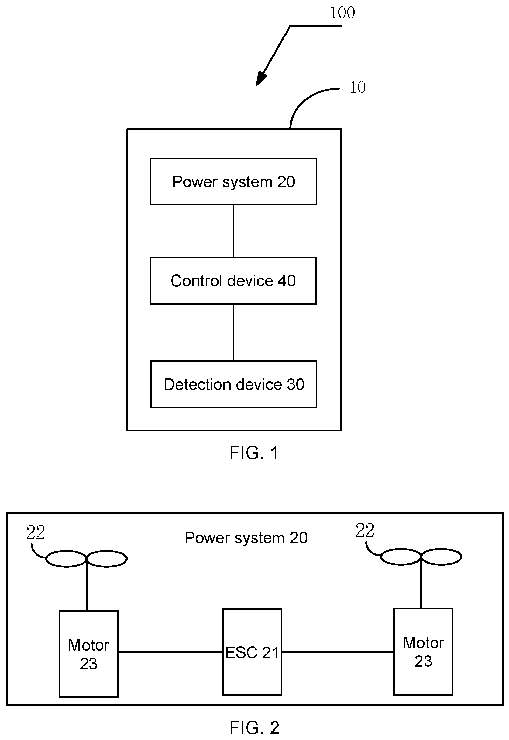

Referring to FIG. 1, the movable platform 100 includes: a body 10; a power system 20 installed on the body 10 to provide driving power for the movable platform; a detection device 30 installed on the body 10 to emit probing light to detect the current scene; and the aforementioned control device 40.

The body 10 refers to the physical structure of the movable platform 100, encompassing its shape, framework, and connecting components. In the movable platform 100, the body 10 is one of the critical components, serving to support and protect the other components of the platform. The body 10 determines the motion performance, stability, and adaptability of the movable platform 100.

The power system 20 provides the necessary power and energy support for the movable platform 100.

Taking an unmanned aerial vehicle (UAV) as an example, please refer to FIG. 2. The power system 20 may include one or more electronic speed controllers (ESCs) 21, one or more propellers 22, and one or more motors 23 corresponding to the propellers. The motor 23 is connected between the ESC 21 and the propeller 22, with the motor 23 and propeller 22 mounted on the wing of the UAV.

Taking a fuel-powered vehicle as an example, the power system 20 may include an internal combustion engine. The engine burns fuel to generate power, driving the vehicle by rotating the engine.

Taking a new energy vehicle as an example, the power system 20 includes a battery pack, a motor, and an electronic control system. The battery pack supplies power to the motor, which converts electrical energy into mechanical energy to drive the vehicle's movement. The electronic control system manages the vehicle's power output, drive mode, and the battery's charging and discharging processes.

The detection device 30 is a crucial tool for the movable platform 100 to perceive its surrounding environment. By utilizing the probing light emitted by the detection device 30, the current scene in which the movable platform 100 is located can be detected, thereby assisting in the subsequent movement decision-making process of the movable platform 100.

The detection device 30 can be a device that achieves ranging based on the Time of Flight (TOF) method using light. For example, the detection device 30 could be a 3D TOF device, or it could also be a lidar, infrared radar, or similar technology.

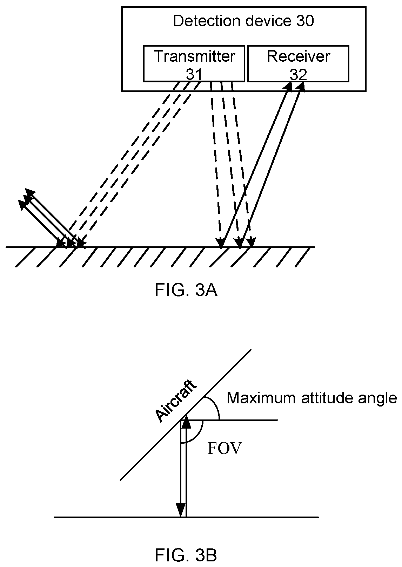

Please refer to FIG. 3A, the detection device 30 may include a transmitter 31 and a receiver 32. The transmitter 31 may emit probing light outward, and the probing light is scattered, reflected, or refracted when it encounters a target in the current environment. A portion of the probing light will be reflected back and return to the receiver after a period of time, and the reflected echo of the probing light is received by the receiver. The probing light includes but is not limited to infrared light, laser, etc.

With reference to FIG. 3B, the transmitter 31 in the detection device 30 includes an emission light source. The emission light source may be configured as a surface light source, and specifically, the transmitter may emit surface-shaped probing light through means such as optical phased arrays, mechanical scanning, etc. Compared to point light sources, surface light sources generally have a coverage range in the shape of a cone or a cylinder (they can also be composed of rays emitted by multiple point light sources), and can provide a wider range of light coverage. The probing light emitted by the emission light source can illuminate at least a portion of the current scene (including one or more reflective surfaces), thereby obtaining more comprehensive measurement results of the current scene based on the reflected light. Exemplarily, the surface light source may be implemented using photoelectric devices such as solid-state laser tubes or light-emitting diodes (LEDs). Different surface light sources correspond to different FOVs (Field of View). The FOV of the surface light source represents the range or angle it can illuminate or radiate. The field of view of the surface light source depends on the nature of the light source and application requirements and may need to be set according to the specific situation in practical applications.

The receiver 32 in the detection device 30 includes an area-array photoelectric sensor. The area-array photoelectric sensor is composed of multiple photoelectric units (which may be photodiodes or photoresistors), and these photoelectric units are arranged in a two-dimensional array. When light shines on the photoelectric units, each photoelectric unit generates and outputs a signal (electrical signal), and the signal intensity corresponds proportionally to the light intensity.

Exemplarily, the detection device 30 may be installed at different positions on the movable platform 100, so as to perform detection in different directions of the movable platform 100. For example, the installation position of the detection device 30 on the movable platform 100 supports the detection device 30 to perform detection in the moving direction of the movable platform 100. In some embodiments, the detection device 30 may be movably disposed relative to the body of the movable platform 100, so that the detection device 30 can change its detection direction by changing its relative pose with respect to the body of the movable platform 100.

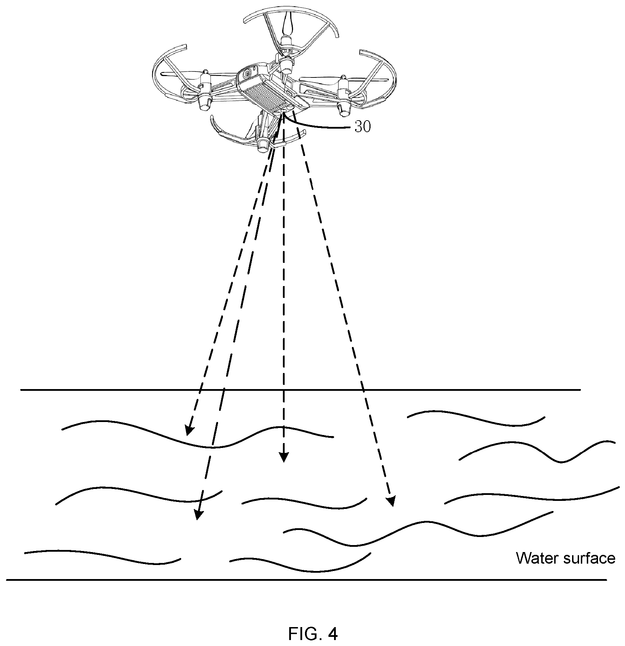

In one example, please refer to FIG. 3B and FIG. 4. Taking the movable platform 100 as an aircraft (manned or unmanned aircraft) as an example, the detection device 30 may be installed at the bottom of the aircraft, so that during the flight of the aircraft, the detection device 30 can detect the scene below the aircraft. It can be understood that the emission light source of the transmitter of the above-mentioned detection device 30 may be configured as a surface light source. The surface light source may specifically form a field of view range in the shape of a pyramid or a cone, and therefore may correspond to a field of view angle. Furthermore, the aircraft may achieve motion with one or more degrees of freedom, such as rotation around one or more axes of rotation (roll axis, yaw axis, and pitch axis). As the attitude of the aircraft changes, the scene below the aircraft detected by the detection device 30 also changes.

With reference to FIG. 3B, the detection device 30 may be installed at the bottom of the aircraft, at least for detecting the scene below the aircraft, so as to determine the height of the aircraft. This embodiment requires that regardless of the attitude in which the aircraft flies, there is always at least one reflective surface of the scene below the aircraft that is perpendicular to the probing light, and the probing light can be reflected back to the area-array photoelectric sensor, thereby enabling the measurement of the aircraft's height. Therefore, the field of view angle of the surface light source may be determined according to the attitude angle of the aircraft to meet the above requirement. Exemplarily, in order to ensure that the height of the aircraft can be measured when flying at any attitude, the field of view angle of the surface light source in the detection device on the aircraft is set to be greater than or equal to 2 times the maximum attitude angle of the aircraft.

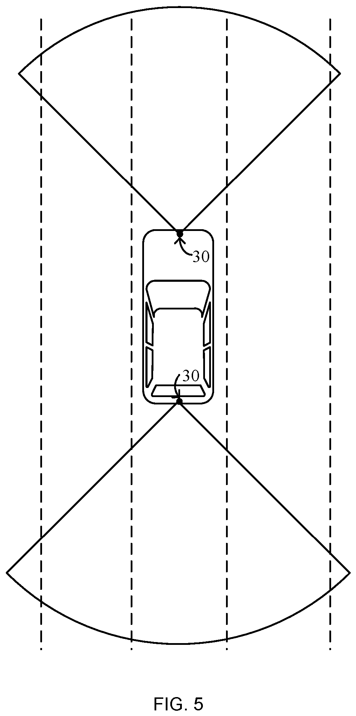

In another example, please refer to FIG. 5. Taking the movable platform 100 as a vehicle as an example, the detection device 30 may be installed on at least one of the front or rear of the vehicle, so that during the movement of the vehicle, the detection device 30 can accordingly detect the scene in front of or behind the vehicle.

The control device 40 may control the detection device 30 to emit probing light to detect the current scene. In the case where the area-array photoelectric sensor receives the reflected echo of the probing light, the control device 40 may perform scene identification based on the signal parameters of multiple signals output by the multiple photoelectric units of the area-array photoelectric sensor. In addition, the control device 40 may also perform subsequent movement decisions based on the scene identification and control the movement of the movable platform 100 according to the decision result.

Of course, the movable platform 100 may further include other types of sensors, such as at least one of a gyroscope, ultrasonic sensor, electronic compass, inertial measurement unit (IMU), vision sensor, global navigation satellite system, or barometer.

Exemplarily, the movable platform 100 may also be in communication connection with a remote control terminal. The remote control terminal may remotely operate the movable platform 100. The remote control terminal includes but is not limited to mobile phones, remote controllers, tablets, personal digital assistants, computers, or wearable devices.

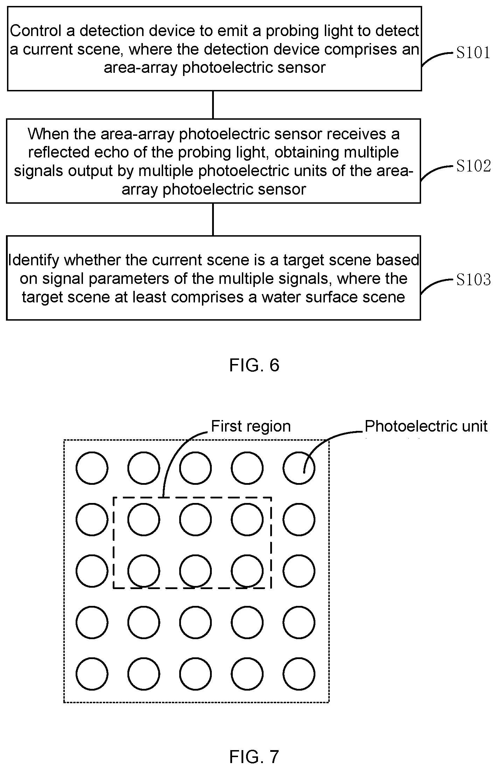

The scene identification method provided in some embodiments of the present application is exemplarily described as follows:
With reference to FIG. 6, which is a schematic flow diagram of a scene identification method provided in some embodiments of the present application, the method is described by taking its application on a movable platform as an example, where the movable platform is equipped with a detection device. The method includes:
In S101, control a detection device to emit a probing light to detect a current scene, where the detection device comprises an area-array photoelectric sensor.

During the movement of the movable platform, the detection device may be controlled to emit probing light. The probing light includes but is not limited to laser or infrared light. In some embodiments, the wavelength range of the probing light may differ from that of visible light to reduce the influence of ambient light on the identification results. When the probing light encounters a target in the current environment, it will be reflected back and, after a period of time, return to the area-array photoelectric sensor, where it is received as the reflected echo of the probing light.

In S102, when the area-array photoelectric sensor receives a reflected echo of the probing light, obtaining multiple signals output by multiple photoelectric units of the area-array photoelectric sensor.

The area-array photoelectric sensor is composed of multiple photoelectric units, which are arranged in a two-dimensional array. When light shines on the photoelectric units, each photoelectric unit generates and outputs a signal. Therefore, multiple signals output by multiple photoelectric units in the area-array photoelectric sensor can be acquired.

In S103, identify whether the current scene is a target scene based on signal parameters of the multiple signals, where the target scene at least comprises a water surface scene.

In some embodiments, scene determination can be directly performed based on the signal parameters of multiple signals output by multiple photoelectric units in the area-array photoelectric sensor, to identify whether the current scene is a water surface scene. This method can avoid the identification issues of passive sensors, such as the inability of vision sensors to accurately identify a water surface scene under low-light or strong-light conditions due to their dependence on ambient light brightness. This method identifies the water surface scene by actively emitting probing light, thereby improving the accuracy of scene identification and the safety during the movement of the movable platform. Moreover, the identification step is simple and can quickly obtain the scene identification result.

In some embodiments, the signal parameters include at least one of the signal intensity or reflectivity corresponding to the signal output by the photoelectric unit. The detection device actively emits probing light to detect the current scene and receives the reflected echo through the area-array photoelectric sensor. The depth corresponding to the signal output by each photoelectric unit can be calculated based on the phase difference between the actively emitted probing light and the reflected echo. The signal intensity corresponding to the signal output by each photoelectric unit can be calculated based on the reflected echo. Based on the signal intensity and depth corresponding to the signal output by each photoelectric unit, the reflectivity corresponding to the signal output by each photoelectric unit can be determined.

In this way, by actively emitting probing light and identifying the current scene based on the signal intensity and/or reflectivity of the reflected echo, the problem of failure to accurately identify a water surface scene due to the limited texture features of the water surface can be avoided, thereby improving the accuracy of identification for texture-less/weak-texture scenes.

In some embodiments, considering that different target scenes have their own scene characteristics, after the detection device performs detection on different target scenes, the signal parameters of multiple signals output by multiple photoelectric units in the area-array photoelectric sensor also differ. Therefore, after the movable platform acquires the signal parameters corresponding to the multiple signals, it may identify whether the current scene is a target scene based on at least one of the distribution or variation of the signal parameters of the multiple signals. This embodiment achieves accurate scene identification based on the reflection of the target scene's characteristics in the signal parameters. The identification step is simple and helps improve the efficiency of scene identification.

Exemplarily, the distribution of the signal parameters includes at least one of the following: the spatial distribution of the signal parameters, or the distribution of the numerical values of the signal parameters. The variation of the signal parameters includes at least one of the following: the spatial variation of the signal parameters, or the temporal variation of the signal parameters.

Taking the target scene including a water surface scene as an example, the reflective surface in the water surface scene is a smooth surface, mainly involving specular reflection. According to the incident angle of the light and the normal direction of the water surface, the light is reflected at an angle equal to the incident angle within the same plane. This scene characteristic causes, in the case where the area-array photoelectric sensor receives the reflected echo of the probing light, a certain region of the photoelectric units to output signals with very high signal intensity and reflectivity, while photoelectric units in other regions output signals with very low signal intensity and reflectivity. Therefore, based on at least one of the distribution or variation of the signal parameters of the multiple signals, it is possible to identify whether the current scene is a water surface scene.

Taking the target scene including a foggy scene as an example, in most foggy scenes, the fog proportion is greater than 50%; while in most non-foggy scenes, the fog proportion is less than 50%. The reflectivity of fog to light is relatively low, because water droplets and tiny particles in the fog scatter, absorb, and refract light, thereby reducing the reflection of light. This scene characteristic results in the area-array photoelectric sensor receiving the reflected echo of the probing light, where the signal intensity and reflectivity of the output signals from most photoelectric units are relatively low. Therefore, based on at least one of the distribution or variation of signal parameters, it is possible to identify whether the current scene is a foggy scene.

In some embodiments, multiple signals can generate at least a portion of a point cloud image, where each pixel in the point cloud image corresponds one-to-one with a photoelectric unit of the area-array photoelectric sensor.

Exemplarily, the point cloud image includes but is not limited to a depth map, a reflectivity map, a signal intensity map, or a point cloud map, etc. (1) Each pixel in the depth map represents the distance from the detection device, and grayscale values or color coding can be used to represent distance information. For example, in a depth map, brighter pixels represent closer objects, while darker pixels represent farther objects. (2) Each pixel in the reflectivity map represents the reflectivity of the detected position, and grayscale values or color coding can be used to represent the magnitude of reflectivity. (3) Each pixel in the signal intensity map represents signal intensity information, and grayscale values or color coding can be used to represent the magnitude of signal intensity. (4) Each pixel in the point cloud map represents a point in three-dimensional space and contains the position of that point and other possible attribute information, such as signal intensity, reflectivity, etc.

The detection device can emit probing light at a preset frequency, and a single frame of a point cloud image can be generated based on multiple signals output by multiple photoelectric units of the area-array photoelectric sensor within a time period; alternatively, multiple frames of point cloud images can be generated based on multiple signals output by multiple photoelectric units of the area-array photoelectric sensor within multiple different time periods, where the multiple different time periods are continuous time periods. The movable platform can identify whether the current scene is a target scene based on a single frame of a point cloud image; or, to improve the accuracy of scene identification, the movable platform can also identify whether the current scene is a target scene based on multiple frames of point cloud images.

Exemplarily, the point cloud image includes signal intensity information and/or reflectivity information; the signal intensity information and reflectivity information of each pixel in the point cloud image correspond one-to-one with the signal parameters of the output signals of the photoelectric units in the area array.

In some embodiments, the movable platform can identify whether the current scene is a target scene based on the distribution and/or variation of signal intensity information in a single frame of a point cloud image. Alternatively, the movable platform can identify whether the current scene is a target scene based on the distribution and/or variation of reflectivity information in a single frame of a point cloud image.

In some embodiments, to improve the accuracy of scene identification, the movable platform can identify whether the current scene is the target scene based on the distribution and/or variation of signal intensity information in multiple frames of point cloud images. Alternatively, the movable platform can identify whether the current scene is the target scene based on the distribution and/or variation of reflectivity information in multiple frames of point cloud images. For example, when the reflectivity information of consecutive multiple frames of point cloud images all conform to the characteristics of a certain target scene, it is determined that the current scene is that target scene.

In some embodiments, in addition to scene identification based on point cloud images, the movable platform can also directly perform scene identification based on the signal parameters of the output signals from the photoelectric unit. As mentioned above, the detection device can emit probing light at a preset frequency, in one possible implementation, the movable platform can identify whether the current scene is the target scene based on the distribution and/or variation of the signal parameters of multiple signals output by multiple photoelectric units of the area-array photoelectric sensor within a time period. Alternatively, in another possible implementation, to improve the accuracy of scene identification, the movable platform can also identify whether the current scene is the target scene based on the distribution and/or variation of multiple signals output by multiple photoelectric units of the area-array photoelectric sensor across multiple different time periods, where the multiple different time periods are consecutive time periods.

In some embodiments, the target scene may include at least one of a water surface scene, a cloud and fog scene, a low-reflectivity land scene, or a non-flat ground scene.

### (1) This is an exemplary description of the identification process for a water surface scene:

The reflective surface in a water surface scene is a smooth surface, primarily involving specular reflection. Based on the angle of incidence of the light and the normal direction of the water surface, the light will be reflected at an angle equal to the angle of incidence within the same plane. In other words, specular reflection causes the light to be reflected back at the same angle, resulting in relatively high signal intensity or reflectivity in specific areas; whereas, in other areas, the light may be reflected at different angles or absorbed, leading to lower signal intensity or reflectivity.

In some embodiments, a water surface scene can be identified based on the spatial distribution of signal intensity. The movable platform can perform scene identification by analyzing the spatial variation and/or distribution of signal intensity information of multiple pixels in point cloud images to determine whether the current scene is a water surface scene. Alternatively, the movable platform can perform scene identification by analyzing the spatial variation and/or distribution of signal intensity of multiple signals output by multiple photoelectric units of the area-array photoelectric sensor to determine whether the current scene is a water surface scene.

For example, a first preset condition related to signal intensity can be set based on the aforementioned characteristics of a water surface scene. If the signal intensity corresponding to multiple photoelectric units meets the first preset condition, the movable platform can determine that the current scene is a water surface scene. More specifically, the movable platform can determine that the current scene is the target scene when the spatial variation and/or distribution of the signal intensity corresponding to multiple photoelectric units satisfies the first preset condition.

With reference to the multiple photoelectric units forming a two-dimensional array included in the area-array photoelectric sensor shown in FIG. 7. The first preset condition is used to characterize that, among the multiple photoelectric units during the same time period, the signal intensities of multiple first photoelectric units are concentratedly distributed, the signal intensities corresponding to the multiple first photoelectric units are greater than those corresponding to the multiple second photoelectric units, and the number of the multiple first photoelectric units is less than the number of the multiple second photoelectric units. And/or, the first preset condition is used to characterize that there exists a region of photoelectric units with a signal intensity gradient variation greater than a threshold. The multiple first photoelectric units are located in a first region, and the multiple second photoelectric units are located in a second region outside the first region; the first region may be any region in the two-dimensional array composed of multiple photoelectric units, and this embodiment does not impose any limitation on this, the first region shown in FIG. 7 is merely for illustrative purposes. This embodiment performs water surface scene identification based on the scenario characteristic that the signal intensity of a specific region is high while the signal intensity of other regions is relatively low, so as to ensure the accuracy of scene identification.

Specifically, the first preset condition may include at least one of the following: (1) the proportion of first photoelectric units whose signal intensity is higher than a first preset threshold is less than a first preset proportion; (2) the first photoelectric units whose signal intensity is higher than the first preset threshold are concentratedly distributed within a region of preset size; (3) the proportion of second photoelectric units whose signal intensity is lower than a second preset threshold is greater than a second preset proportion, where the second preset proportion is greater than the first preset proportion, and the second preset threshold is less than or equal to the first preset threshold; or (4) there exists a gradient value of signal intensity variation corresponding to multiple adjacent photoelectric units that is greater than a third preset threshold.

It is understandable that the specific values of the first preset threshold, the second preset threshold, the third preset threshold, the first preset proportion, the second preset proportion, and the region of preset size may be set according to the actual application scenario, and this embodiment does not impose any limitation thereon.

In some embodiments, water surface scene identification may also be performed based on the spatial distribution of reflectivity. The movable platform may perform scene identification based on the spatial variation and/or spatial distribution of reflectivity information of multiple pixels in the point cloud image, so as to identify whether the current scene is a water surface scene. That is, the movable platform may perform scene identification based on the spatial variation and/or spatial distribution of the reflectivity of multiple signals output by multiple photoelectric units of the area-array photoelectric sensor, so as to identify whether the current scene is a water surface scene.

By way of example, a second preset condition related to reflectivity may be set based on the above-mentioned scene characteristics of the water surface scene. When the reflectivity corresponding to multiple photoelectric units satisfies the second preset condition, the movable platform determines that the current scene is a water surface scene. More specifically, the movable platform may determine that the current scene is a target scene when the spatial variation and/or spatial distribution of the reflectivity corresponding to multiple photoelectric units satisfies the second preset condition.

With reference to the multiple photoelectric units forming a two-dimensional array included in the area-array photoelectric sensor shown in FIG. 7. The second preset condition is used to characterize that, among the multiple photoelectric units during the same time period, the reflectivity of multiple first photoelectric units is concentratedly distributed, the reflectivity corresponding to the multiple first photoelectric units is greater than that corresponding to the multiple second photoelectric units, and the number of the multiple first photoelectric units is less than the number of the multiple second photoelectric units. And/or, the second preset condition is used to characterize that there exists a region of photoelectric units with a reflectivity gradient variation greater than a threshold. This embodiment performs water surface scene identification based on the scenario characteristic that the reflectivity of a specific region is high while the reflectivity of other regions is relatively low, so as to ensure the accuracy of scene identification.

Specifically, the second preset condition may include at least one of the following: (1) the proportion of first photoelectric units whose reflectivity is higher than a fourth preset threshold is less than a first preset proportion; (2) the first photoelectric units whose reflectivity is higher than the fourth preset threshold are concentratedly distributed within a region of preset size; (3) the proportion of second photoelectric units whose reflectivity is lower than a fifth preset threshold is greater than a second preset proportion, where the second preset proportion is greater than the first preset proportion, and the fifth preset threshold is less than or equal to the fourth preset threshold; (4) there exists a gradient value of reflectivity variation corresponding to multiple adjacent photoelectric units that is greater than a sixth preset threshold.

It is understandable that the specific values of the fourth preset threshold, the fifth preset threshold, and the sixth preset threshold may be set according to the actual application scenario. Among them, considering that the reflectivity of the signal output by the photoelectric unit is also determined based on the depth of the signal intensity corresponding to the signal, that is, the reflectivity and the signal intensity of the signal output by the same photoelectric unit are positively correlated, the higher the signal intensity of the photoelectric unit, the correspondingly higher its reflectivity. Therefore, the first preset proportion, the second preset proportion, and the region of preset size in the first preset condition, and the first preset proportion, the second preset proportion, and the region of preset size in the second preset condition may be correspondingly set to the same values. Of course, in some scenarios, the two may also be set to different values, and this embodiment does not impose any limitation thereon.

In some embodiments, water surface scene identification may also be performed based on the numerical magnitude of signal intensity (the signal intensity values in the vast majority of regions are relatively low). A first interval and a first preset range related to signal intensity may be set based on the above-mentioned scene characteristics of the water surface scene. Among the signal intensities of multiple signals output by multiple photoelectric units of the area-array photoelectric sensor, if the proportion of signal intensities whose values fall within the first interval reaches the first preset range, the current scene may be determined to be a water surface scene. It is understandable that the upper limit value of the first interval is less than or equal to the first preset threshold in the above-mentioned first preset condition. The first preset range may be [90%, 100%]. This embodiment performs water surface scene identification based on the scenario characteristic that the signal intensity values in the vast majority of regions are relatively low, so as to ensure the accuracy of scene identification.

In some embodiments, water surface scene identification may also be performed based on the numerical magnitude of reflectivity (the reflectivity values in the vast majority of regions are relatively low). A second interval and a second preset range related to reflectivity may be set based on the above-mentioned scene characteristics of the water surface scene. Among the reflectivity values of multiple signals output by multiple photoelectric units of the area-array photoelectric sensor, if the proportion of reflectivity values falling within the second interval reaches the second preset range, the current scene may be determined to be a water surface scene. It is understandable that the upper limit value of the second interval is less than or equal to the fourth preset threshold in the above-mentioned second preset condition. The second preset range may be [90%, 100%], and the first preset range and the second preset range may be the same. This embodiment performs water surface scene identification based on the scenario characteristic that the reflectivity values in the vast majority of regions are relatively low, so as to ensure the accuracy of scene identification.

It is understandable that, in actual application scenarios, the above four methods for identifying the water surface scene may use only one of them or any combination thereof, and this embodiment does not impose any limitation thereon. A single frame of point cloud image (or signal parameters of multiple signals output by multiple photoelectric units within one time period) may be used to identify whether the current scene is a water surface scene according to any one or more of the above methods. Alternatively, to improve the accuracy of scene identification, multiple frames of point cloud images (or signal parameters of multiple signals output by multiple photoelectric units at different time periods) may be used to identify whether the current scene is a water surface scene according to any one or more of the above methods. For example, M frames of point cloud images are each identified according to any one of the above methods, and if at least N frames of the point cloud images determine that the current scene is a water surface scene, it may be finally confirmed that a water surface scene has been identified, where M > N, and N is an integer greater than 1; where the multiple frames of point cloud images can reflect the temporal variation of the signal parameters.

In some embodiments, considering that besides the water surface scene exhibiting specular reflection, other scenes such as ice surfaces and glass also exhibit specular reflection phenomena, in order to improve the identification accuracy of the water surface scene, in addition to using at least one of the above methods to identify the water surface scene, visual information may also be further combined for judgment. By way of example, the movable platform is also equipped with a visual sensor. Visual information collected by the visual sensor for the current scene can be obtained; then, based on the visual information and the signal parameters of multiple signals, it is identified whether the current scene is a water surface scene; where the visual information is at least used to exclude other specular scenes besides the water surface scene. This embodiment implements exclusion of other specular scenes based on visual information, which is conducive to improving the identification accuracy of the water surface scene.

By way of example, a visual identification model may be pre-trained, for instance, the visual identification model is obtained through supervised training based on positive samples and negative samples. The positive samples are visual information of the water surface scene, with the label "yes"; the negative samples are visual information of other specular scenes excluding the water surface scene, with the label "no." The trained visual identification model is used to perform water surface scene identification based on the input visual information, thereby outputting two identification results: "yes" or "no."

### (2) An illustrative explanation of the identification process for cloud and fog scenes is provided:

In most cloud and fog scenes, the proportion of clouds and fog is greater than 50%; whereas in most non-cloud and fog scenes, the proportion of clouds and fog is less than 50%. The reflectivity of clouds and fog to light is relatively low, which is due to the water droplets and tiny particles in clouds and fog scattering, absorbing, and refracting light, thereby reducing the reflection of light. The water droplets and particles in clouds and fog have different sizes and shapes. They can deflect light from its original path and scatter it in different directions. This scattering makes the propagation of light in clouds and fog more random and dispersed, reducing the direct reflection of light to the observer. Additionally, the water droplets and particles in clouds and fog also absorb a portion of the light's energy, causing the light to gradually weaken, especially in thicker cloud layers, where the absorption effect of light is more pronounced. These scene characteristics result in relatively low signal intensity and reflectivity of the reflected echo.

In some embodiments, the aforementioned multiple signals can generate at least a portion of a point cloud image. Each pixel point in the point cloud image corresponds one-to-one with a photoelectric unit of the area-array photoelectric sensor. Based on at least one of the reflectivity information or signal intensity information of multiple pixel points in the point cloud image, the distribution of numerical values is analyzed for scene identification to identify whether the current scene is a cloud or fog scene. Alternatively, the movable platform can perform scene identification based on at least one of the reflectivity information or signal intensity information of multiple signals output by multiple photoelectric units of the area-array photoelectric sensor, analyzing the distribution of numerical values to identify whether the current scene is a cloud or fog scene.

In one possible implementation, the determination of a cloud or fog scene can be made based on the number of cloud or fog points. The movable platform counts the number of cloud or fog points through at least one of the following methods: (1) counting the number of signals, among the multiple signals output by multiple photoelectric units of the area-array photoelectric sensor, whose signal intensity is less than a seventh preset threshold, to determine the number of cloud or fog points; or (2) counting the number of signals whose reflectivity is less than an eighth preset threshold, to determine the number of cloud or fog points. After identifying the number of cloud or fog points, if the number of cloud or fog points falls within a third preset range, the current scene is identified as a cloud or fog scene. For example, the lower limit of the third preset range is greater than or equal to half of the total number of photoelectric units included in the area-array photoelectric sensor, meaning the proportion of cloud or fog points exceeds 50%.

It can be understood that the seventh preset threshold and the eighth preset threshold can be specifically set based on actual application scenarios, and this embodiment imposes no restrictions on this. For example, taking reflectivity as an example, the reflectivity of objects in the natural environment to light signals is greater than 5%, while the reflectivity of clouds and fog to light signals is typically less than 2%, with possibly a small portion of areas having reflectivity between 2% and 5%. In this case, the eighth preset threshold can be set to 5%.

In another possible implementation, the determination of a cloud or fog scene can be made based on the characteristic that clouds and fog have low reflectivity to light signals. Based on this characteristic of clouds and fog, a third preset condition can be set. The movable platform can identify the current scene as a cloud or fog scene when the proportion of the reflectivity values of multiple signals distributed across different intervals satisfies the third preset condition. The third preset condition is used to characterize that the reflectivity values corresponding to multiple signals are concentrated within a preset interval.

For example, the different intervals may include a third interval and a fourth interval, where the upper limit of the third interval is less than or equal to the lower limit of the fourth interval. The third preset condition includes: the proportion of the reflectivity of multiple signals in the third interval is greater than that in the fourth interval, and the sum of the proportions of the reflectivity of multiple signals in the third and fourth intervals is greater than a third preset proportion.

For instance, as mentioned earlier, the reflectivity of objects in the natural environment to light signals is greater than 5%, while the reflectivity of clouds and fog to light signals is typically less than 2%, with possibly a small portion of areas having reflectivity between 2% and 5%. When the clouds and fog are denser, some areas may have reflectivity greater than 5%. For example, the upper limit of the third interval is 2%, the lower limit of the fourth interval is 2%, and the upper limit can be set to 5% or greater than 5%. The third preset condition is used to characterize that the reflectivity values of multiple signals are concentrated within the third and fourth intervals, with the majority distributed in the third interval.

It can be understood that a single frame of a point cloud image (or the signal parameters of multiple signals output by multiple photoelectric units within a certain time period) can be used to identify whether the current scene is a cloud or fog scene using any one or more of the methods described above. Alternatively, to improve the accuracy of scene identification, multiple frames of point cloud images (or the signal parameters of multiple signals output by multiple photoelectric units in different time periods) can be used to identify whether the current scene is a cloud or fog scene using any one or more of the methods described above. For example, if M frames of point cloud images are individually analyzed using any of the aforementioned methods, and at least N frames of point cloud images all determine that the current scene is a cloud or fog scene, then it can be ultimately confirmed that a cloud or fog scene has been identified, where M > N, and N is an integer greater than 1. Herein, multiple frames of point cloud images can reflect the temporal changes in signal parameters.

In some embodiments, water surface scenes also exhibit relatively low reflectivity and signal intensity. However, water surface scenes primarily involve specular reflection phenomena, whereas cloud and fog scenes primarily involve diffuse reflection phenomena. In water surface scenes, there are cases of sudden changes in signal intensity or reflectivity, while in cloud and fog scenes, signal intensity or reflectivity is generally low. Therefore, it is possible to first identify whether the current scene is a water surface scene using any of the aforementioned water surface scene identification methods. If it is determined that the scene is not a water surface scene, then the current scene can be identified as a cloud or fog scene using any of the aforementioned cloud and fog scene identification methods.

For example, the movable platform can determine whether the current scene is a water surface scene based on the first signal parameters of multiple signals. If the current scene is determined to be a non-water surface scene, the movable platform can then identify whether the current scene is a cloud or fog scene based on the second signal parameters of multiple signals. The first signal parameters and the second signal parameters may be different; for instance, the first signal parameters could be the signal intensity corresponding to the signals, while the second signal parameters could be the reflectivity corresponding to the signals. Alternatively, the first signal parameters and the second signal parameters may be the same, such as both being signal intensity or both being reflectivity. The specific identification methods for water surface scenes and cloud or fog scenes can refer to the descriptions provided earlier, and will not be repeated herein. In this embodiment, when identifying a cloud or fog scene, first ruling out the water surface scene situation helps improve the accuracy of cloud or fog scene identification.

In some embodiments, in addition to identifying whether the current scene is a water surface scene using any of the aforementioned water surface scene identification methods, other sensors can also be utilized. For example, a barometer can be used to make a judgment by detecting whether the air pressure value output by the barometer meets the air pressure conditions for a water surface. If it does not, the water surface scene can be ruled out.

In some embodiments, the purpose of scene determination is to ascertain whether the depth information of multiple signals output by multiple photoelectric units of the area-array photoelectric sensor is usable. Clouds and fog do not actually obstruct the movement of the movable platform, so the depth information of multiple signals output by multiple photoelectric units of the area-array photoelectric sensor is invalid. To improve processing efficiency, a detection threshold can be set. Before performing cloud or fog scene identification, it is checked whether the reflectivity of multiple signals output by multiple photoelectric units of the area-array photoelectric sensor is all below this detection threshold. If so, it is determined that all the signals output by multiple photoelectric units of the area-array photoelectric sensor are invalid (i.e., useful depth information cannot be obtained), and there is no need to proceed with cloud or fog scene identification to directly determine that the depth information corresponding to the signals is unusable.

The detection threshold can be set to a reflectivity below 2%. For example, if multiple consecutive frames of point cloud images all identify the current scene as a cloud or fog scene, the detection threshold can be further increased, eliminating the need for additional cloud or fog scene identification, thereby further improving processing efficiency.

### (3) An illustrative explanation of the identification of low-reflectivity terrestrial scenes is provided:

The inventors discovered that, unlike cloud and fog scenes, the reflectivity of clouds and fog to light signals is typically less than 2%, whereas certain low-reflectivity terrestrial scenes, such as asphalt roads, have reflectivity primarily concentrated between 2% and 5%, and there are no sudden changes in reflectivity. Therefore, a fourth preset condition can be set based on the characteristics of low-reflectivity terrestrial scenes. After acquiring multiple signals output by multiple photoelectric units of the area-array photoelectric sensor, if the reflectivity of the multiple signals satisfies the fourth preset condition, the current scene is determined to be a low-reflectivity terrestrial scene. The fourth preset condition includes: among the reflectivity of multiple signals, the proportion of reflectivity values within a fifth interval is greater than a fourth preset proportion; and/or the gradient changes in reflectivity corresponding to the multiple signals are all less than a threshold.

For example, the lower limit of the fifth interval can be less than or equal to 2%, the upper limit can be greater than or equal to 5%, and the fourth preset proportion can be greater than 50%.

It should be understood that, due to the rich feature points/textures of clouds and fog in visual sensors, visual sensors often mistakenly identify clouds and fog as solid obstacles, which may cause the aircraft to trigger obstacle avoidance actions.

Due to the distribution and/or variation characteristics of the signal intensity and reflectivity parameters of the echo reflected by clouds and fog, identification can be based on the distribution and/or variation information of the signal parameters of multiple signals. The embodiments of this application identify cloud and fog scenes by actively emitting probing light, thereby reducing unintended actions such as deceleration or hovering caused by erroneous triggering of obstacle avoidance in cloud and fog scenes, thus enhancing the flight safety and operational efficiency of the aircraft.

### (4) An illustrative explanation of the identification process for non-flat ground scenes is provided:

In non-flat ground scenes, the reflectivity for optical signals is relatively high, therefore, the fifth preset condition can be set based on the scene characteristics of non-flat ground scenes. After acquiring multiple signals output by the multiple photoelectric units of the area-array photoelectric sensor, if the reflectivity of the multiple signals satisfies the fifth preset condition, it is determined that the current scene is a non-flat ground scene. The fifth preset condition includes: among the reflectivity of the multiple signals, the proportion of reflectivity values that are in the sixth interval is greater than the fifth preset proportion. Exemplarily, the lower limit of the sixth interval can be greater than or equal to 5%, and the fifth preset proportion can be greater than 50%.

In non-flat ground scenes, the sensing range of an area-array sensor can be used to identify terrain undulations, thereby further improving the safety of the movable platform during operation.

In some embodiments, when the current scene is identified as the target scene, prompt information corresponding to the target scene is output. The prompt information can be at least one of visual information or auditory information. In some embodiments, the prompt information can also be an electrical signal indicating the target scene or an identifier in communication signaling, etc. The prompt information can be directly output by the movable platform; or, the prompt information can be output through a remote control terminal communicatively connected to the movable platform. The remote control terminal can be installed with relevant devices for outputting prompt information, such as a display or a speaker, etc.

Exemplarily, if the current scene is a cloud/fog scene, then the depth corresponding to the signal output by the photoelectric unit of the area-array photoelectric sensor may be the distance between the movable platform and the cloud/fog. And the cloud/fog actually does not cause an obstruction to the movement process of the movable platform, therefore this depth is invalid; then, instead of outputting depth information, a prompt message can be output, such as "Current scene is a cloud/fog scene, you can continue to pass."

Exemplarily, if the current scene is a scene other than a cloud/fog scene (such as a water surface scene, a low-reflectivity land scene, and a non-flat ground scene, etc.), these scenes have an impact on the movement or landing of the movable platform, then the depth corresponding to the signal output by the photoelectric unit of the area-array photoelectric sensor is valid. Movement decisions can be made based on this depth, and prompt information corresponding to the target scene can be output. Taking the water surface scene as an example, the output prompt information can be "water surface scene, land with caution."

In some embodiments, please refer to FIG. 3B and FIG. 4, the detection device 30 can be installed at the bottom of the movable platform, or arranged facing downward of the movable platform, and the current scene to be detected can include the scene below the movable platform carrying the detection device 30. The detection device 30 can determine the height of the movable platform. The detection device 30 has a field of view angle, so regardless of what attitude the movable platform flies in, regardless of whether the reflection occurring on the reflecting surface is diffuse reflection or specular reflection, as long as the field of view angle is large enough, there will always be a light beam perpendicular to the reflecting surface of the current scene that can be reflected back to the area-array photoelectric sensor. In this way, the height of the movable platform can be determined according to the light signal reflected back from the light beam perpendicular to the reflecting surface of the current scene.

Furthermore, in the case where the current scene is a specular reflection scene, if the detection device is arranged at the front or rear of the movable platform, when detecting the scene diagonally below the movable platform, the probing light will cause the detection device to be unable to receive the reflected echo due to specular reflection, which in turn leads to the inability to effectively identify the target scene. In particular, since the aircraft can move in the height direction, the collection of scene information above and below the aircraft is very important.

In such scenarios, by installing the detection device at the bottom of the movable platform, or arranging it facing downward of the movable platform, the movable platform can still receive reflected light in specular reflection scenes, thereby effectively identifying the scene below the movable platform.

Therefore, when identifying that the current scene is a scene other than a cloud and fog scene (such as water surface scene, low-reflectivity land scene, and non-flat ground scene, etc.), the movable platform can determine the height information of the movable platform according to the minimum value among the depths respectively corresponding to the multiple signals output by the photoelectric units of the area-array photoelectric sensor, and then output the height information of the movable platform.

Exemplarily, if the reflecting surface of the current scene is a plane, then the minimum value among the depths respectively corresponding to the multiple signals output by the photoelectric units of the area-array photoelectric sensor is the height of the movable platform.

Exemplarily, if the reflecting surface of the current scene is a surface with undulations, then the movable platform also needs to further combine the current attitude of the movable platform, and determine the height information of the movable platform according to the minimum value among the depths respectively corresponding to the multiple signals and the current attitude of the movable platform.

Referring to FIG. 3B and FIG. 4, in some embodiments, the movable platform can be an aircraft. In order to achieve the ability to measure the height of the aircraft from the reflecting surface of the current scene at any attitude of the aircraft, that is, to achieve full coverage of attitude angles, it is necessary to determine the field of view angle of the detection device arranged on the movable platform according to the maximum attitude angle of the aircraft. Exemplarily, the field of view angle of the detection device arranged on the aircraft is greater than or equal to 2 times the maximum attitude angle of the aircraft. Among them, the maximum attitude angle can be understood as the maximum included angle between the rotor plane and the horizontal plane when the aircraft is in flight. In the case where the aircraft is a single-rotor aircraft, the rotor plane can be a plane that passes through the center of the rotor blade and is perpendicular to the rotation axis of the rotor blade. In the case where the aircraft is a multi-rotor aircraft, the rotor plane can be a plane formed by the connecting line of the centers of multiple rotor blades.

The following provides exemplary descriptions of the control process for the movable platform under different target scenes:
(1) If the target scene is a cloud and fog scene.
   As mentioned above, cloud and fog actually do not cause obstruction to the movement process of the movable platform, so the depth corresponding to the signal output by the photoelectric units of the area-array photoelectric sensor is invalid. Then, in the case of identifying that the current scene is a cloud and fog scene, the movable platform can be controlled to move at the original speed; or, for safety considerations, the movable platform can also be first controlled to move at a speed lower than the original speed for a preset duration, and then move at the original speed. This embodiment realizes that in the case of identifying a cloud and fog scene, the movable platform is controlled to move normally without needing to perform obstacle avoidance processing, thereby improving control.
(2) If the target scene is water surface scene.

Under water surface scene, the signal parameters of the multiple signals output by the multiple photoelectric units of the area-array photoelectric sensor also include depth information. The depth information characterizes the distance between the movable platform and the water surface, the water surface has an impact on the movement or landing of the movable platform, and this depth information is valid.

In some embodiments, the movable platform includes an aircraft; in the case of identifying that the current scene is water surface scene, the aircraft can be controlled to maintain hovering at a preset height from the water surface. Exemplarily, the distance between the aircraft and the water surface can be determined according to the depths corresponding to the multiple signals, and then the aircraft can be controlled to maintain hovering at a preset height from the water surface according to the distance between the aircraft and the water surface. This embodiment realizes that the aircraft hovers above the water surface, avoids the aircraft from mistakenly landing on the water surface, and ensures the safety of the aircraft.

In some embodiments, the movable platform includes an aircraft. In the case of identifying that the current scene is water surface scene, the aircraft can identify whether waves exist in the water surface scene according to the distribution situation and/or change situation of the depths corresponding to the multiple signals. Exemplarily, the distribution situation of the depths corresponding to the multiple signals includes at least one of the following: the spatial distribution situation of the depths corresponding to the multiple signals, or the numerical size distribution situation of the depths corresponding to the multiple signals. The change situation of the depths corresponding to the multiple signals includes at least one of the following: the spatial change situation of the depths corresponding to the multiple signals, or the temporal change situation of the depths corresponding to the multiple signals.

As an example, considering the phenomenon of wave undulation, such as the situation where there are highs and lows of waves in different regions at the same moment. For this type of scene characteristic, for example, in time period T, among multiple photoelectric units of the area-array photoelectric sensor, if the depths of the signals output by the photoelectric units located in different regions are different, and the differences in the depths of the signals output by the photoelectric units located in the same region are small, then it is determined that there are waves present in the water surface scene.

In another example, considering the phenomenon of wave undulation, such as the situation where the same region may experience waves rising and then receding at different moments, for this type of scene characteristic, for example, if the depth of the signal output by the photoelectric unit located in a certain region in the area-array photoelectric sensor during time period T is different from the depth of the signal output by the photoelectric unit located in the same region in the area-array photoelectric sensor during time period T+1, then it is determined that there are waves present in the water surface scene.

If it is identified that there are waves present in the water surface scene, the aircraft can be controlled to maintain a preset distance from the waves during hovering, in order to avoid the impact of the waves on the aircraft (such as situations where waves strike the aircraft causing failure of certain components, crash, etc.). Alternatively, the aircraft can be controlled to maintain a preset distance from the water surface during hovering, so as to ensure that the hovering position of the aircraft on the water surface is not changed by the waves, thereby ensuring the stability of the aircraft's hovering. Or, the aircraft can also detect through depth information that the distance to the waves is less than a threshold, and then control the aircraft to move away from the waves; specifically, it can be set according to actual conditions.

In some embodiments, the movable platform includes an aircraft. In the case where the current scene is identified as a water surface scene, it can be determined that the depth information corresponding to multiple signals is valid. The aircraft can identify whether there are objects on the water and/or underwater objects in the water surface scene according to the distribution and/or variation of the depths corresponding to the multiple signals. Exemplarily, the distribution of the depths corresponding to the multiple signals includes at least one of the following: the spatial distribution of the depths corresponding to the multiple signals, or the distribution of the numerical values of the depths corresponding to the multiple signals. The variation of the depths corresponding to the multiple signals includes at least one of the following: the spatial variation of the depths corresponding to the multiple signals, or the temporal variation of the depths corresponding to the multiple signals.

As an example, considering the regional distribution of objects, if during time period T, among multiple photoelectric units of the area-array photoelectric sensor, the depths of the signals output by the photoelectric units in a certain region are all greater than the depth of the water surface, then it can be determined that there is an object on the water. Alternatively, if the depths of the signals output by the photoelectric units in a certain region are all less than the depth of the water surface, then it can be determined that there is an object underwater.

In one possible implementation, in the case where an object on the water is identified, the landing position of the aircraft can further be determined based on the position of the object on the water. The position of the object on the water can be determined according to the spatial distribution of the depths of multiple signals output by multiple photoelectric units of the area-array photoelectric sensor. This embodiment achieves landing in the case where an object on the water is identified, avoiding the aircraft mistakenly landing on the water surface, thereby ensuring the safety of the aircraft.

Exemplarily, in order to improve the landing accuracy and safety, visual information can also be used to identify whether the object on the water is a landable point. Visual information of the current scene acquired by the visual sensor can be obtained; in the case where the object on the water is identified as a landable point based on the visual information, the landing position of the aircraft can be determined according to the position of the object on the water.

In this case, during the process of landing to the position of the object on the water, the aircraft can be controlled to descend slowly at a speed lower than the original speed, so as to ensure the safety of the aircraft.

(3) If the target scene is a non-flat-ground scene.

In the non-flat-ground scene, the signal parameters of multiple signals output by multiple photoelectric units of the area-array photoelectric sensor further include depth information. The depth information characterizes the distance between the movable platform and the non-flat ground, and the non-flat ground has an impact on the movement or landing of the movable platform, so the depth information is valid.

In some embodiments, in the case where the current scene is identified as a non-flat-ground scene, it is possible to identify whether the current scene contains a step or a slope according to the distribution of the depths of multiple signals and the current posture of the movable platform, and output prompt information based on the identification result. As an example, the prompt information includes but is not limited to "A slope is present herein, please control with caution to avoid collision."

In some embodiments, the movable platform includes an aircraft. In the case where the current scene is identified as a non-flat-ground scene, the aircraft can, during the execution of tasks such as terrain-following flight (terrain-following flight is a UAV flight technology, which refers to a UAV maintaining a fixed height relative to a known three-dimensional terrain during operation, so that the aircraft maintains a constant height difference with the target ground object.), control the aircraft to always maintain a preset distance from slopes or steps by using the distribution of the depths of multiple signals and the current posture of the aircraft, so as to improve operation accuracy and efficiency.

Exemplarily, the movable platform includes an aircraft. In the case where the current scene is identified as containing steps or slopes, the aircraft can be controlled to hover while maintaining a preset distance from the steps or slopes, or the aircraft can be controlled to continue flying while maintaining a preset distance from the steps or slopes. This embodiment achieves safe control of the aircraft through the identification of steps or slopes, avoiding collision situations.

In another possible implementation, the movable platform includes an aircraft. In the case where the current scene is identified as a non-flat-ground scene, it is possible to identify whether the current scene contains a landable airport guide groove according to the distribution of the depths of multiple signals and the current posture of the movable platform. In the case where the current scene contains a landable airport guide groove, the aircraft is controlled to land into the guide groove. This embodiment achieves precise landing of the aircraft through the identification of the airport guide groove.

(4) If the target scene is a low-reflectivity land scene.

In a low-reflectivity land scene, the signal parameters of multiple signals output by multiple photoelectric units of the area-array photoelectric sensor further include depth information, and the depth information characterizes the distance between the movable platform and the land. The land has an impact on the movement or landing of the movable platform, and this depth information is valid.

In some embodiments, the movable platform includes an aircraft. The aircraft can be controlled to safely land on the low-reflectivity land based on the depths of multiple signals output by multiple photoelectric units of the area-array photoelectric sensor.

Various technical features in the above embodiments can be arbitrarily combined as long as the combinations do not have conflicts or contradictions, therefore any arbitrary combination of the various technical features in the above embodiments also falls within the scope disclosed in this specification.

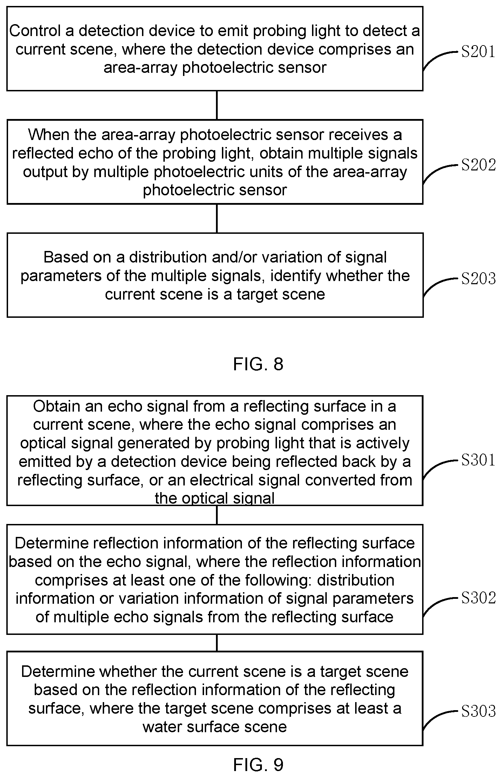

With reference to FIG. 8, some embodiments of the present application provide another scene identification method, including:
In S201, control a detection device to emit probing light to detect a current scene, where the detection device comprises an area-array photoelectric sensor.
In S202, when the area-array photoelectric sensor receives a reflected echo of the probing light, obtain multiple signals output by multiple photoelectric units of the area-array photoelectric sensor.
In S203, based on a distribution and/or variation of signal parameters of the multiple signals, identify whether the current scene is a target scene.

This embodiment takes into account that the scene characteristics of different target scenes will cause differences in the signal parameters of multiple signals output by multiple photoelectric units of the area-array photoelectric sensor. Therefore, by actively emitting probing light, based on the distribution and/or variation of signal parameters of multiple signals of the received reflected echo, it is possible to directly identify whether the current scene is the target scene. This method can avoid the problem that passive sensors, such as visual sensors, which rely on ambient light brightness, cannot identify the current scene in low-light or high-light conditions. This method achieves scene identification by actively emitting probing light, improving the accuracy of scene identification and the safety of the movable platform during movement. Moreover, the identification steps are simple, facilitating quick acquisition of scene identification results.

In some embodiments, the signal parameters include the signal intensity corresponding to the signal and/or the reflectivity. The reflectivity is determined based on the signal intensity corresponding to the signal and the depth corresponding to the signal.

In some embodiments, the distribution of signal parameters includes the spatial distribution of signal parameters and/or the distribution of the numerical values of signal parameters. The variation of signal parameters includes the spatial variation of signal parameters and/or the temporal variation of signal parameters.

In some embodiments, multiple signals can generate at least a partial point cloud image. Each pixel in the point cloud image corresponds one-to-one with a photoelectric unit of the area-array photoelectric sensor. The point cloud image includes signal intensity information and/or reflectivity information. The signal intensity information and reflectivity information of each pixel in the point cloud image correspond one-to-one with the signal parameters of the output signals of the photoelectric units in the area array. Then, S203 includes: based on the distribution and/or variation of signal intensity information and/or reflectivity information in one or more frames of the point cloud image, identifying whether the current scene is the target scene.

In some embodiments, the target scene includes a water surface scene. S203 includes: based on the signal intensity information of multiple pixels in the point cloud image, performing scene identification according to the spatial variation and/or spatial distribution to identify whether the current scene is a water surface scene; and/or based on the reflectivity information of multiple pixels in the point cloud image, performing scene identification according to the spatial variation and/or spatial distribution to identify whether the current scene is a water surface scene.

In some embodiments, the target scene includes a water surface scene. S203 includes: when the signal intensities corresponding to multiple photoelectric units satisfy a first preset condition, identifying that the current scene is a water surface scene. The first preset condition is used to characterize that, within the same time period, the signal intensities of multiple first photoelectric units located in a first region are concentratedly distributed, the signal intensities corresponding to the multiple first photoelectric units are greater than the signal intensities corresponding to multiple second photoelectric units located in a second region outside the first region, and the number of the multiple first photoelectric units is less than the number of the multiple second photoelectric units; and/or, the first preset condition is used to characterize the presence of a photoelectric unit region with a signal intensity gradient change greater than a threshold.

The first preset condition includes at least one of the following: (1) the proportion of first photoelectric units with signal intensity higher than a first preset threshold is less than a first preset proportion; (2) the first photoelectric units with signal intensity higher than the first preset threshold are concentratedly distributed within a region of a preset size; (3) the proportion of second photoelectric units with signal intensity lower than a second preset threshold is greater than a second preset proportion, where the second preset proportion is greater than the first preset proportion, and the second preset threshold is less than or equal to the first preset threshold; (4) there exists a gradient value of signal intensity change corresponding to multiple adjacent photoelectric units that is greater than a third preset threshold.

In some embodiments, the target scene includes a water surface scene. S203 includes: when the reflectivity corresponding to multiple photoelectric units satisfies a second preset condition, identifying that the current scene is a water surface scene.

The second preset condition is used to characterize that, within the same time period, the reflectivity of multiple first photoelectric units located in a first region is concentratedly distributed, the reflectivity corresponding to the multiple first photoelectric units is greater than the reflectivity corresponding to multiple second photoelectric units located in a second region outside the first region, and the number of the multiple first photoelectric units is less than the number of the multiple second photoelectric units; and/or, the second preset condition is used to characterize the presence of a photoelectric unit region with a reflectivity gradient change greater than a threshold.

The second preset condition includes at least one of the following: (1) the proportion of first photoelectric units with reflectivity higher than a fourth preset threshold is less than a first preset proportion; (2) the first photoelectric units with reflectivity higher than the fourth preset threshold are concentratedly distributed within a region of a preset size; (3) the proportion of second photoelectric units with reflectivity lower than a fifth preset threshold is greater than a second preset proportion, where the second preset proportion is greater than the first preset proportion, and the fifth preset threshold is less than or equal to the fourth preset threshold; (4) there exists a gradient value of reflectivity change corresponding to multiple adjacent photoelectric units that is greater than a sixth preset threshold.

In some embodiments, the target scene includes a water surface scene. S203 includes: among the signal intensities of multiple signals, if the proportion of signal intensities within a first interval reaches a first preset range, identifying that the current scene is a water surface scene; and/or among the reflectivities of multiple signals, if the proportion of reflectivity values within a second interval reaches a second preset range, identifying that the current scene is a water surface scene.

In some embodiments, the target scene also includes a cloud and fog scene. S203 includes: counting the number of signals with signal intensity less than a seventh preset threshold to determine the number of cloud and fog points; and/or counting the number of signals with reflectivity less than an eighth preset threshold to determine the number of cloud and fog points. If the number of cloud and fog points reaches a third preset range, identifying that the current scene is a cloud and fog scene.

In some embodiments, the target scene also includes a cloud and fog scene. S203 includes: when the proportion of the numerical values of the reflectivity of multiple signals in different intervals satisfies a third preset condition, identifying the current scene as a cloud and fog scene. The third preset condition is used to characterize that the numerical values of the reflectivity corresponding to multiple signals are concentratedly distributed in a preset interval. The different intervals include a third interval and a fourth interval, where the upper limit of the third interval is less than or equal to the lower limit of the fourth interval; the third preset condition includes: the proportion of the reflectivity of multiple signals in the third interval is greater than the proportion in the fourth interval, and the sum of the proportions of the reflectivity of multiple signals in the third interval and the fourth interval is greater than a third preset proportion.

In some embodiments, the target scene also includes a cloud and fog scene. S203 includes: when the current scene is determined to be a non-water surface scene based on the first signal parameters of multiple signals, identifying whether the current scene is a cloud and fog scene based on the second signal parameters of multiple signals, where the first signal parameters are different from the second signal parameters.

In some embodiments, the method is applied to a movable platform. The method further includes: when the current scene is identified as a water surface scene, controlling the movable platform to maintain hovering at a preset height above the water surface.

In some embodiments, the method further includes: acquiring visual information of the current scene collected by a visual sensor. S203 includes: identifying whether the current scene is a water surface scene based on the visual information and the signal parameters of multiple signals. The visual information is at least used to rule out other specular scenes besides the water surface scene.

In some embodiments, the method is applied to a movable platform. The method further includes: when the current scene is identified as the target scene, outputting prompt information corresponding to the target scene.

In some embodiments, the method is applied to a movable platform. The method further includes: when the current scene is identified as a cloud and fog scene, controlling the movable platform to move at the original speed, or controlling the movable platform to move at a speed lower than the original speed for a preset duration before resuming movement at the original speed.

In some embodiments, the signal parameters of multiple signals further include depth information.

In some embodiments, the method further includes: when the current scene is identified as a water surface scene, identifying whether there are objects on the water surface and/or underwater objects in the water surface scene based at least on the distribution and/or variation of the depths corresponding to multiple signals.

In some embodiments, the method is applied to a movable platform. The method further includes: if an object on the water surface is identified in the water surface scene, identifying the landing position of the movable platform based on the position of the object on the water surface.

In some embodiments, the method further includes: when the current scene is identified as a water surface scene, identifying whether there are waves in the water surface scene based on the distribution and/or variation of the depths of multiple signals.

In some embodiments, the method is applied to a movable platform. The method further includes: if waves are identified in the water surface scene, controlling the movable platform to maintain a preset distance from the waves during hovering; or, if waves are identified in the water surface scene, controlling the movable platform to maintain a preset distance from the water surface during hovering.

In some embodiments, the current scene is a scene below a movable platform equipped with a detection device.

In some embodiments, the method further includes: outputting height information of the movable platform; the height information of the movable platform is determined based on a minimum value among depths respectively corresponding to multiple signals.

In some embodiments, the height information of the movable platform is determined based on a minimum value among depths respectively corresponding to multiple signals and a current attitude of the movable platform.

In some embodiments, a field of view angle of the detection device installed on the movable platform is determined based on a maximum attitude angle of the movable platform.

In some embodiments, the field of view angle is greater than or equal to twice the maximum attitude angle of the movable platform.

In some embodiments, the target scene also includes non-flat ground scenes.

In some embodiments, the method further includes: identifying whether the current scene includes stairs or slopes based on a distribution of depths of multiple signals and a current attitude of the movable platform, and outputting prompt information based on the identification result.

In some embodiments, the signal parameters include depths corresponding to the signals. These embodiments further include: identifying whether the current scene includes a landable airport guidance groove based on a distribution of depths of multiple signals and a current attitude of the movable platform; in a case where the current scene includes a landable airport guidance groove, controlling the movable platform to land within the guidance groove.

In some embodiments, the target scene also includes low-reflectivity land scenes. S203 includes: if reflectivities of multiple signals satisfy a fourth preset condition, identifying that the current scene is a low-reflectivity land scene. The fourth preset condition includes: among reflectivities of the multiple signals, a proportion of reflectivity values within a fifth interval is greater than a fourth preset proportion; and/or reflectivity gradient changes corresponding to the multiple signals are all less than a threshold.

With reference to FIG. 9, some embodiments of the present application also provide a scene identification method, including:
In S301, obtain an echo signal from a reflecting surface in a current scene, where the echo signal comprises an optical signal generated by probing light that is actively emitted by a detection device being reflected back by a reflecting surface, or an electrical signal converted from the optical signal.
In S302, determine reflection information of the reflecting surface based on the echo signal, where the reflection information comprises at least one of the following: distribution information or variation information of signal parameters of multiple echo signals from the reflecting surface.
In S303, determine whether the current scene is a target scene based on the reflection information of the reflecting surface, where the target scene comprises at least a water surface scene.

This embodiment considers that scene characteristics of different target scenes will cause differences in reflection information corresponding to multiple echo signals reflected by reflecting surfaces. Therefore, whether the current scene is a target scene can be directly identified based on distribution conditions and/or variation conditions of signal parameters of multiple echo signals reflected back by the reflecting surface. This method can avoid the problem that passive sensors such as visual sensors cannot identify the current scene in low-light or strong-light scenarios due to requirements for environmental light brightness. This method realizes scene identification through non-visual means, improving scene identification accuracy and safety during movement of the movable platform. Moreover, the identification steps are simple, which helps to quickly obtain scene identification results. And water surface scene identification can be performed based on scene characteristics of water surface scene.

In some embodiments, the detection device may also include an area-array photoelectric sensor as described in the above embodiments, and the light source emitted by the detection device may be configured as an area light source. Echo signals reflected by the reflecting surface may be acquired by the area-array photoelectric sensor of the detection device, which is specifically similar to the above embodiments and will not be described in detail herein. It should be understood that the methods in the above embodiments can be combined with each other in this embodiment.

In some embodiments, the signal parameters include signal intensity corresponding to the signal, and/or reflectivity. The reflectivity is determined based on the signal intensity corresponding to the signal and the depth corresponding to the signal.

In some embodiments, the distribution of signal parameters includes spatial distribution of signal parameters, and/or distribution of numerical values of signal parameters. The variation of signal parameters includes spatial variation of signal parameters, and/or temporal variation of signal parameters.

In some embodiments, multiple reflection signals from the reflecting surface are signals output by multiple photoelectric units on the area-array photoelectric sensor.

In some embodiments, the multiple signals are capable of generating at least a portion of a point cloud image. Each pixel point in the point cloud image corresponds one-to-one with a photoelectric unit of the area-array photoelectric sensor. S303 includes: identifying whether the current scene is a target scene based on one frame or multiple frames of point cloud images.

In some embodiments, the point cloud image includes signal intensity information and/or reflectivity information. The signal intensity information and reflectivity information of each pixel point in the point cloud image correspond one-to-one with signal parameters of signals output by photoelectric units in the area array. S303 includes: performing scene identification based on spatial variation conditions and/or spatial distribution conditions of signal intensity information of multiple pixel points in the point cloud image to identify whether the current scene is a water surface scene; and/or performing scene identification based on spatial variation conditions and/or spatial distribution conditions of reflectivity information of multiple pixel points in the point cloud image to identify whether the current scene is a water surface scene.

In some embodiments, S303 includes: identifying that the current scene is a water surface scene under the condition that the signal intensities corresponding to a plurality of photoelectric units satisfy a first preset condition. The first preset condition is used to characterize that, among the plurality of photoelectric units in the same time period, the signal intensities corresponding to a plurality of first photoelectric units located in a first region are concentratedly distributed, the signal intensities corresponding to the plurality of first photoelectric units are greater than the signal intensities corresponding to a plurality of second photoelectric units located in a second region outside the first region, and the number of the plurality of first photoelectric units is less than the number of the plurality of second photoelectric units; and/or, the first preset condition is used to characterize the presence of a photoelectric unit region with a signal intensity gradient change greater than a threshold.

The first preset condition includes at least one of the following: (1) the proportion of first photoelectric units with signal intensity higher than a first preset threshold is less than a first preset proportion; (2) the first photoelectric units with signal intensity higher than the first preset threshold are concentratedly distributed within a region of preset size; (3) the proportion of second photoelectric units with signal intensity lower than a second preset threshold is greater than a second preset proportion, where the second preset proportion is greater than the first preset proportion, and the second preset threshold is less than or equal to the first preset threshold; (4) a variation gradient value of the signal intensities corresponding to a plurality of adjacent photoelectric units is greater than a third preset threshold.

In some embodiments, S303 includes: identifying that the current scene is a water surface scene under the condition that the reflectivities corresponding to a plurality of photoelectric units satisfy a second preset condition. The second preset condition is used to characterize that, among the plurality of photoelectric units in the same time period, the reflectivities corresponding to a plurality of first photoelectric units located in a first region are concentratedly distributed, the reflectivities corresponding to the plurality of first photoelectric units are greater than the reflectivities corresponding to a plurality of second photoelectric units located in a second region outside the first region, and the number of the plurality of first photoelectric units is less than the number of the plurality of second photoelectric units; and/or, the second preset condition is used to characterize the presence of a photoelectric unit region with a reflectivity gradient change greater than a threshold.

The second preset condition includes at least one of the following: (1) the proportion of first photoelectric units with reflectivity higher than a fourth preset threshold is less than a first preset proportion; (2) the first photoelectric units with reflectivity higher than the fourth preset threshold are concentratedly distributed within a region of preset size; (3) the proportion of second photoelectric units with reflectivity lower than a fifth preset threshold is greater than a second preset proportion, where the second preset proportion is greater than the first preset proportion, and the fifth preset threshold is less than or equal to the fourth preset threshold; (4) a variation gradient value of the reflectivities corresponding to a plurality of adjacent photoelectric units is greater than a sixth preset threshold.

In some embodiments, S303 includes: if the proportion of signal intensities whose values fall within a first interval among a plurality of signal intensities reaches a first preset range, identifying that the current scene is a water surface scene; and/or if the proportion of reflectivity values whose values fall within a second interval among a plurality of reflectivities reaches a second preset range, identifying that the current scene is a water surface scene.

In some embodiments, the target scene further includes a cloud and fog scene. Then S303 includes: counting the number of signal intensities among a plurality of signals that are less than a seventh preset threshold to determine the number of cloud and fog points; and/or counting the number of reflectivities among a plurality of signals that are less than an eighth preset threshold to determine the number of cloud and fog points. If the number of cloud and fog points reaches a third preset range, identifying that the current scene is a cloud and fog scene.

In some embodiments, the target scene further includes a cloud and fog scene. S303 includes: identifying the current scene as a cloud and fog scene under the condition that the proportions of reflectivity values of a plurality of signals falling within different intervals satisfy a third preset condition. The third preset condition is used to characterize that the reflectivity values corresponding to the plurality of signals are concentratedly distributed within a preset interval.

The different intervals include a third interval and a fourth interval. The upper limit of the third interval is less than or equal to the lower limit of the fourth interval. The third preset condition includes: the proportion of reflectivities of the plurality of signals falling within the third interval is greater than the proportion falling within the fourth interval, and the sum of the proportions of the reflectivities of the plurality of signals falling within the third interval and the fourth interval is greater than a third preset proportion.

In some embodiments, S303 includes: under the condition that the current scene is determined to be a non-water surface scene based on a first signal parameter of a plurality of signals, identifying whether the current scene is a cloud and fog scene based on a second signal parameter of the plurality of signals, where the first signal parameter is different from the second signal parameter. In some embodiments, the method is applied to a movable platform. The method further includes: under the condition that the current scene is identified as a water surface scene, controlling the movable platform to hover at a preset height above the water surface. In some embodiments, it further includes: acquiring visual information of the current scene collected by a visual sensor. S303 includes: identifying whether the current scene is a water surface scene according to the visual information and the signal parameters of the plurality of signals; where the visual information is at least used to exclude other specular scenes outside the water surface scene. In some embodiments, the method is applied to a movable platform. The method further includes: under the condition that the current scene is identified as a target scene, outputting prompt information corresponding to the target scene. In some embodiments, the method is applied to a movable platform. The method further includes: under the condition that the current scene is identified as a cloud and fog scene, controlling the movable platform to move at the original speed, or controlling the movable platform to move at a speed lower than the original speed for a preset duration and then move at the original speed.

In some embodiments, the signal parameters of the plurality of signals further include depth information. In some embodiments, it further includes: under the condition that the current scene is identified as a water surface scene, identifying whether there are above-water objects and/or underwater objects in the water surface scene at least based on the distribution and/or variation of the depths corresponding to the plurality of signals.

In some embodiments, the method is applied to a movable platform. The method further includes: if above-water objects are identified in the water surface scene, identifying a landing position for the movable platform based on the positions of the above-water objects. In some embodiments, it further includes: under the condition that the current scene is identified as a water surface scene, identifying whether waves exist in the water surface scene based on the distribution and/or variation of the depths of a plurality of signals. In some embodiments, the method is applied to a movable platform. The method further includes: if waves are identified in the water surface scene, controlling the movable platform to maintain a preset distance from the waves during hovering; or, if waves are identified in the water surface scene, controlling the movable platform to maintain a preset distance from the water surface during hovering. In some embodiments, the current scene is a scene beneath a movable platform equipped with a detection device. In some embodiments, the method further includes: outputting height information of the movable platform; the height information of the movable platform is determined based on the minimum of the depths corresponding to the plurality of signals. In some embodiments, the height information of the movable platform is determined based on the minimum of the depths corresponding to the plurality of signals and the current posture of the movable platform. In some embodiments, the field of view of the detection device installed on the movable platform is determined based on the maximum attitude angle of the movable platform. In some embodiments, the field of view is greater than or equal to twice the maximum attitude angle of the movable platform. In some embodiments, the target scene further includes a non-flat ground scene. In some embodiments, it further includes: identifying whether the current scene includes stairs or ramps based on the distribution of depths of the plurality of signals and the current posture of the movable platform, and outputting prompt information based on the identification result. In some embodiments, the signal parameters include the depth corresponding to the signal. The method further includes: identifying whether the current scene includes a landable airport guidance groove based on the distribution of depths of the plurality of signals and the current posture of the movable platform; under the condition that the current scene includes a landable airport guidance groove, controlling the movable platform to land into the guidance groove. In some embodiments, the target scene further includes a low-reflectivity land scene. S303 includes: if the reflectivities of the plurality of signals satisfy a fourth preset condition, identifying that the current scene is a low-reflectivity land scene. The fourth preset condition includes: among the reflectivities of the plurality of signals, the proportion of reflectivity values falling within a fifth interval is greater than a fourth preset proportion; and/or the reflectivity gradient changes corresponding to the plurality of signals are all less than a threshold.

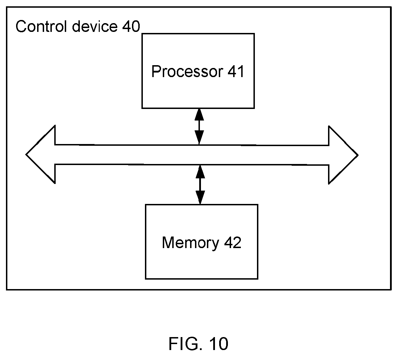

In some embodiments, please refer to FIG. 10, an embodiment of the present application further provides a control device 40, including: a memory 42 for storing executable instructions; one or more processors 41, where when the one or more processors 41 execute the executable instructions, they are configured, individually or collectively, to perform any one of the methods described above.

For example, the control device may be installed in a movable platform as shown in FIG. 1. Of course, in some embodiments, the control device may also be electrically connected or communicatively connected to the movable platform. For instance, the control device may also be a controller, mobile device, or the like for remotely controlling the movable platform, which is not limited herein.

The processor 41 executes executable instructions included in the memory 42. The processor 41 may be a Central Processing Unit (CPU), or it may be other general-purpose processors, a Digital Signal Processor (DSP), an Application Specific Integrated Circuit (ASIC), a Field-Programmable Gate Array (FPGA), or other programmable logic devices, discrete gate or transistor logic devices, discrete hardware components, etc. The general-purpose processor may be a microprocessor, or the processor may also be any conventional processor, etc.

The memory 42 stores executable instructions for the scene identification method. The memory 42 may include at least one type of storage medium, including flash memory, hard disk, multimedia card, card-type memory (e.g., SD or DX memory, etc.), Random Access Memory (RAM), Static Random Access Memory (SRAM), Read-Only Memory (ROM), Electrically Erasable Programmable Read-Only Memory (EEPROM), Programmable Read-Only Memory (PROM), magnetic storage, magnetic disk, optical disk, etc. Moreover, the device may collaborate with a network storage device that performs the storage function of the memory through a network connection. The memory 42 may be an internal storage unit of the control device 40, such as a hard disk or memory of the control device 40. The memory 42 may also be an external storage device of the control device 40, such as a plug-in hard disk, Smart Media Card (SMC), Secure Digital (SD) card, Flash Card, etc., equipped on the control device 40. Furthermore, the memory 42 may include both the internal storage unit and the external storage device of the control device 40. The memory 42 is used to store the computer program 44 as well as other programs and data required by the device. The memory 42 may also be used to temporarily store data that has been output or is to be output.

The various embodiments described herein may be implemented using computer-readable media, such as computer software, hardware, or any combination thereof. For hardware implementation, the embodiments described herein may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, or electronic units designed to perform the functions described herein. For software implementation, embodiments such as procedures or functions may be implemented with separate software modules that allow the execution of at least one function or operation. Software code may be implemented by a software application (or program) written in any suitable programming language, and the software code may be stored in memory and executed by a controller.

The implementation process of the functions and roles of each unit in the above device is detailed in the implementation process of the corresponding steps in the above method, and will not be repeated herein.

In some exemplary embodiments, a non-transitory computer-readable storage medium including instructions is also provided, for example, a memory including instructions, where the instructions can be executed by a processor of the device to perform the above method. For example, the non-transitory computer-readable storage medium may be ROM, RAM, Compact Disc Read-Only Memory (CD-ROM), magnetic tape, floppy disk, optical data storage device, etc.

When the instructions in the storage medium are executed by the processor of a terminal, a non-transitory computer-readable storage medium enables the terminal to perform the above method.

It should be noted that in this disclosure, relational terms such as first and second are used solely to distinguish one entity or operation from another entity or operation, without necessarily requiring or implying any such actual relationship or order between these entities or operations. The terms "include," "comprise," or any other variations thereof are intended to cover a non-exclusive inclusion, such that a process, method, article, or device that includes a series of elements not only includes those elements but also includes other elements not explicitly listed, or includes elements inherent to such process, method, article, or device. In the absence of further limitations, an element defined by the phrase "including a ..." does not exclude the presence of additional identical elements in the process, method, article, or device that includes the element.

The methods and devices provided by the embodiments of the present application have been described in detail above. Specific examples have been used herein to illustrate the principles and implementations of the present application. The descriptions of the above embodiments are only intended to help understand the methods and core ideas of the present application; meanwhile, for a person skilled in the art, based on the ideas of the present application, there may be changes in the specific implementations and application scope. In summary, the content of this specification should not be construed as a limitation to the present application.

## Claims

1. A scene identification method, **characterized by** comprising:
controlling a detection device to emit probing light to detect a current scene, wherein the detection device comprises an area-array photoelectric sensor;
in response to the area-array photoelectric sensor receiving a reflected echo of the probing light, obtaining a plurality of signals output by a plurality of photoelectric units of the area-array photoelectric sensor; and
identifying whether the current scene is a target scene based on signal parameters of the plurality of signals, wherein the target scene at least comprises a water surface scene.

2. A scene identification method, **characterized by** comprising:
controlling a detection device to emit probing light to detect a current scene, wherein the detection device comprises an area-array photoelectric sensor;
in response to the area-array photoelectric sensor receiving a reflected echo of the probing light, obtaining a plurality of signals output by a plurality of photoelectric units of the area-array photoelectric sensor; and
identifying whether the current scene is a target scene based on a distribution and/or variation of signal parameters of the plurality of signals.

3. The method according to claim 1 or 2, **characterized in that** the signal parameters comprise a signal intensity and/or a reflectivity corresponding to a signal.

4. The method according to claim 3, **characterized in that** the reflectivity is determined based on the signal intensity corresponding to the signals and a depth corresponding to the signals.

5. The method according to any one of claims 1 to 4, **characterized in that** the identifying whether the current scene is the target scene based on the signal parameters of the plurality of signals comprises:
identifying whether the current scene is the target scene based on a distribution and/or variation of the signal parameters of the plurality of signals.

6. The method according to claim 5, **characterized in that** the distribution of the signal parameters comprises a spatial distribution of the signal parameters and/or a value magnitude distribution of the signal parameters.

7. The method according to claim 5, **characterized in that** the variation of the signal parameters comprises a spatial variation of the signal parameters and/or a temporal variation of the signal parameters.

8. The method according to any one of claims 1 to 7, **characterized in that** the plurality of signals are capable of generating at least a partial point cloud image, each pixel in the point cloud image corresponding one-to-one with a photoelectric unit of the area-array photoelectric sensor; and
the identifying whether the current scene is the target scene based on the signal parameters of the plurality of signals comprises:
identifying whether the current scene is the target scene based on one or more frames of the point cloud image.

9. The method according to claim 8, **characterized in that** the point cloud image comprises signal intensity information and/or reflectivity information; the signal intensity information and reflectivity information of each pixel in the point cloud image correspond one-to-one with signal parameters of the signals output by the photoelectric units in the area-array;
the identifying whether the current scene is the target scene based on the signal parameters of the plurality of signals, wherein the target scene at least comprises the water surface scene, comprises:
performing scene identification based on a spatial variation and/or spatial distribution of signal intensity information of a plurality of pixels in the point cloud image to determine whether the current scene is the water surface scene; and/or
performing scene identification based on a spatial variation and/or spatial distribution of reflectivity information of a plurality of pixels in the point cloud image to determine whether the current scene is the water surface scene.

10. The method according to any one of claims 1 to 9, **characterized in that** the identifying whether the current scene is the target scene based on the signal parameters of the plurality of signals, wherein the target scene at least comprises a water surface scene comprises:
in response to that signal intensities corresponding to the plurality of photoelectric units satisfy a first preset condition, identifying the current scene to be a water surface scene, wherein
the first preset condition is configured to characterize that, among the plurality of photoelectric units in a same time period, signal intensities corresponding to a plurality of first photoelectric units located in a first region are concentratedly distributed, the signal intensities corresponding to the plurality of first photoelectric units are greater than signal intensities corresponding to a plurality of second photoelectric units located in a second region outside the first region, a number of the plurality of first photoelectric units is less than a number of the plurality of second photoelectric units; and/or, the first preset condition is configured to characterize a photoelectric unit region in which a signal intensity gradient change greater than a threshold.

11. The method according to claim 10, **characterized in that** the first preset condition comprises at least one of:
a proportion of first photoelectric units with signal intensity higher than a first preset threshold being less than a first preset proportion;
the first photoelectric units with signal intensity higher than the first preset threshold being concentratedly distributed within a region of a preset size;
a proportion of second photoelectric units with signal intensity lower than a second preset threshold being greater than a second preset proportion, wherein the second preset proportion is greater than the first preset proportion, and the second preset threshold is less than or equal to the first preset threshold;
a plurality of adjacent photoelectric units with a gradient value of signal intensity variation being greater than a third preset threshold.

12. The method according to any one of claims 1 to 9, **characterized in that** the identifying whether the current scene is the target scene based on the signal parameters of the plurality of signals, wherein the target scene at least comprises a water surface scene comprises:
in response to that reflectivities corresponding to the plurality of photoelectric units satisfy a second preset condition, identifying the current scene to be a water surface scene, wherein
the second preset condition is configured to characterize that, among the plurality of photoelectric units in a same time period, reflectivities corresponding to a plurality of first photoelectric units located in a first region are concentratedly distributed, the reflectivities corresponding to the plurality of first photoelectric units are greater than reflectivities corresponding to a plurality of second photoelectric units located in a second region outside the first region, a number of the plurality of first photoelectric units is less than a number of the plurality of second photoelectric units, and/or the second preset condition is configured to characterize a photoelectric unit region in which a reflectivity gradient change greater than a threshold.

13. The method according to claim 12, **characterized in that** the second preset condition comprises at least one of:
a proportion of first photoelectric units with reflectivities higher than a fourth preset threshold being less than a first preset proportion;
the first photoelectric units with reflectivities higher than the fourth preset threshold being concentratedly distributed within a region of a preset size;
a proportion of second photoelectric units with reflectivities lower than a fifth preset threshold being greater than a second preset proportion, wherein the second preset proportion is greater than the first preset proportion, and the fifth preset threshold is less than or equal to the fourth preset threshold;
a plurality of adjacent photoelectric units with a gradient value of reflectivity variation being greater than a sixth preset threshold.

14. The method according to any one of claims 1 to 6, **characterized in that** the identifying whether the current scene is the target scene based on the signal parameters of the plurality of signals comprises:
in response to a proportion of signal intensities within a first interval among the signal intensities of the plurality of signals being within a first preset range, identifying the current scene to be a water surface scene; and/or
in response to a proportion of reflectivity values within a second interval among the reflectivities of the plurality of signals being with a second preset range, identifying the current scene to be a water surface scene.

15. The method according to any one of claims 1 to 14, **characterized in that** the target scene further comprises a cloud and fog scene.

16. The method according to claim 15, **characterized in that** the identifying whether the current scene is the target scene based on the signal parameters of the plurality of signals comprises:
counting a number of the plurality of signals with signal intensities less than a seventh preset threshold to determine a number of cloud and fog points; and/or,
counting a number of the plurality of signals with reflectivities less than an eighth preset threshold to determine a number of cloud and fog points; and
in response to the number of the cloud and fog points reaching a third preset range, identifying the current scene to be a cloud and fog scene.

17. The method according to claim 15, **characterized in that** the identifying whether the current scene is the target scene based on the signal parameters of the plurality of signals, comprising:
in response to proportions of reflectivity values of the plurality of signals within different intervals satisfy a third preset condition, identifying the current scene to be a cloud and fog scene, wherein the third preset condition is configured to characterize that the reflectivity values corresponding to the plurality of signals are concentratedly distributed within a preset interval.

18. The method according to claim 17, **characterized in that** the different intervals comprise a third interval and a fourth interval, an upper limit of the third interval is less than or equal to a lower limit of the fourth interval; and
the third preset condition comprises: a proportion of reflectivities of the plurality of signals within the third interval being greater than a proportion of reflectivities of the plurality of signals within the fourth interval, and a sum of the proportions of the reflectivities of the plurality of signals within the third interval and the fourth interval being greater than a third preset proportion.

19. The method according to claim 15, **characterized in that** the identifying whether the current scene is the target scene based on the signal parameters of the plurality of signals comprises:
in response to the current scene being determined to be a non-water surface scene based on a first signal parameter of the plurality of signals, identifying whether the current scene is a cloud and fog scene based on a second signal parameter of the plurality of signals, wherein the first signal parameter is different from the second signal parameter.

20. The method according to any one of claims 1 to 14, **characterized in that** the method is applied to a movable platform, and the method further comprises:
in response to the current scene being identified as a water surface scene, controlling the movable platform to maintain hovering at a preset height above a water surface.

21. The method according to any one of claims 1 to 14, **characterized in that** the method further comprises:
obtaining visual information of the current scene collected by a visual sensor;
and
the identifying whether the current scene is the target scene based on the signal parameters of the plurality of signals comprises:
identifying whether the current scene is a water surface scene based on the visual information and the signal parameters of the plurality of signals, wherein the visual information is at least configured to exclude other specular scenes than the water surface scene.

22. The method according to any one of claims 1 to 19, **characterized in that** the method is applied to a movable platform, and the method further comprises:
in response to the current scene being determined as the target scene, outputting prompt information corresponding to the target scene.

23. The method according to any one of claims 15 to 19, **characterized in that** the method is applied to a movable platform, and the method further comprises:
in response to the current scene being determined as a cloud and fog scene, controlling the movable platform to move at an original speed, or controlling the movable platform to move at a speed lower than the original speed for a preset duration and then move at the original speed.

24. The method according to any one of claims 1 to 19, **characterized in that** the signal parameters of the plurality of signals further comprise depth information.

25. The method according to claim 24, **characterized in that** the method further comprises:
in response to the current scene being determined as a water surface scene, identifying whether there exists an above-water object and/or an underwater object in the water surface scene at least based on distribution and/or variation of depths corresponding to the plurality of signals.

26. The method according to claim 24, **characterized in that** the method is applied to a movable platform, and the method further comprises:
in response to an above-water object being identified in the water surface scene, identifying a landing position of the movable platform based on a position of the above-water object.

27. The method according to claim 24, **characterized in that** the method further comprises:
in response to the current scene being identified as a water surface scene, identifying whether there exists a wave in the water surface scene based on distribution and/or variation of depths of the plurality of signals.

28. The method according to claim 24, **characterized in that** the method is applied to a movable platform, and the method further comprises:
in response to a wave being identified in the water surface scene, controlling the movable platform to maintain a preset distance from the wave during a hovering process; or
in response to a wave being identified in the water surface scene, controlling the movable platform to maintain a preset distance from a water surface during a hovering process.

29. The method according to claim 24, **characterized in that** the current scene is a scene below the movable platform carrying the detection device.

30. The method according to claim 29, **characterized in that** the method further comprises:
outputting height information of the movable platform; the height information of the movable platform is determined based on a minimum value among depths corresponding to the plurality of signals.

31. The method according to claim 29, **characterized in that** the height information of the movable platform is determined based on a minimum value among depths corresponding to the plurality of signals and a current posture of the movable platform.

32. The method according to claim 1, 2, or 31, **characterized in that** a field of view angle of the detection device on the movable platform is determined based on a maximum attitude angle of the movable platform.

33. The method according to claim 32, **characterized in that** the field of view angle is greater than or equal to 2 times the maximum attitude angle of the movable platform.

34. The method according to any one of claims 29 to 33, **characterized in that** the target scene further comprises a non-flat scene.

35. The method according to claim 34, **characterized in that** the method further comprises:
identifying whether the current scene contains stairs or a slope based on depth distribution of the plurality of signals and a current attitude of the movable platform, and outputting prompt information based on an identification result.

36. The method according to claim 34, **characterized in that** the signal parameters comprise a depth corresponding to a signal; the method further comprises:
identifying whether the current scene comprises a landable airport guide groove based on depth distribution of the plurality of signals and a current attitude of the movable platform; and
in response to the current scene comprises a landable airport guide groove, controlling the movable platform to land in the guide groove.

37. The method according to any one of claims 1 to 19, **characterized in that** the target scene further comprises a low-reflectivity land scene.

38. The method according to claim 37, **characterized in that** the identifying whether the current scene is a target scene based on the signal parameters of the plurality of signals comprises:
in response to reflectivities of the plurality of signals satisfying a fourth preset condition, determining that the current scene is a low-reflectivity land scene, wherein
the fourth preset condition comprises: among the reflectivities of the plurality of signals, a proportion of reflectivity values within a fifth interval is greater than a fourth preset proportion; and/or gradient changes of the reflectivities corresponding to the plurality of signals are all less than a threshold.

39. A scene identification method, **characterized in that** the method comprises:
obtaining an echo signal of a reflective surface in a current scene, wherein the echo signal comprises an optical signal reflected back from the reflective surface by probing light actively emitted by a detection device, or an electrical signal converted from the optical signal;
determining reflection information of the reflective surface based on the echo signal, wherein the reflection information comprises at least one of distribution information or variation information of signal parameters of a plurality of echo signals of the reflective surface; and
determining whether the current scene is a target scene based on the reflection information of the reflective surface, wherein the target scene at least comprises a water surface scene.

40. The method according to claim 39, **characterized in that** the signal parameters comprise a signal intensity and/or reflectivity corresponding to a signal; wherein the reflectivity is determined based on the signal intensity corresponding to the signal and a depth corresponding to the signal.

41. The method according to claim 39, **characterized in that** the distribution of the signal parameters comprises a spatial distribution of the signal parameters and/or a value magnitude distribution of the signal parameters; a spatial variation of the signal parameters and/or a temporal variation of the signal parameters.

42. The method according to any one of claims 1 to 41, **characterized in that** the plurality of reflection signals of the reflective surface are signals output by a plurality of photoelectric units on an area-array photoelectric sensor.

43. The method according to claim 42, **characterized in that** the plurality of signals are capable of generating at least a partial point cloud image, each pixel in the point cloud image corresponding one-to-one with a photoelectric unit of the area-array photoelectric sensor; and
the determining whether the current scene is the target scene based on the reflection information of the reflective surface comprises:
identifying whether the current scene is the target scene based on one or more frames of the point cloud image.

44. The method according to claim 43, **characterized in that** the point cloud image comprises signal intensity information and/or reflectivity information; the signal intensity information and reflectivity information of each pixel in the point cloud image correspond one-to-one to the signal parameters of the signals output by the photoelectric units in the area array;
the determining whether the current scene is the target scene based on the reflection information of the reflective surface comprises:
performing scene identification based on a spatial variation and/or spatial distribution of signal intensity information of a plurality of pixels in the point cloud image to determine whether the current scene is the water surface scene; and/or
performing scene identification based on a spatial variation and/or spatial distribution of reflectivity information of a plurality of pixels in the point cloud image to determine whether the current scene is the water surface scene.

45. The method according to claim 42, **characterized in that** the determining whether the current scene is the target scene based on the reflection information of the reflective surface comprises:
in response to that signal intensities corresponding to the plurality of photoelectric units satisfy a first preset condition, identifying the current scene to be a water surface scene, wherein
the first preset condition is configured to characterize that, among the plurality of photoelectric units in a same time period, signal intensities corresponding to a plurality of first photoelectric units located in a first region are concentratedly distributed, the signal intensities corresponding to the plurality of first photoelectric units are greater than signal intensities corresponding to a plurality of second photoelectric units located in a second region outside the first region, a number of the plurality of first photoelectric units is less than a number of the plurality of second photoelectric units; and/or, the first preset condition is configured to characterize a photoelectric unit region in which a signal intensity gradient change greater than a threshold.

46. The method according to claim 45, **characterized in that** the first preset condition comprises at least one of:
a proportion of first photoelectric units with signal intensity higher than a first preset threshold being less than a first preset proportion;
the first photoelectric units with signal intensity higher than the first preset threshold being concentratedly distributed within a region of a preset size;
a proportion of second photoelectric units with signal intensity lower than a second preset threshold being greater than a second preset proportion, wherein the second preset proportion is greater than the first preset proportion, and the second preset threshold is less than or equal to the first preset threshold;
a plurality of adjacent photoelectric units with a gradient value of signal intensity variation being greater than a third preset threshold.

47. The method according to claim 42, **characterized in that** the determining whether the current scene is the target scene based on the reflection information of the reflective surface comprises:
in response to that reflectivities corresponding to the plurality of photoelectric units satisfy a second preset condition, identifying the current scene to be a water surface scene, wherein
the second preset condition is configured to characterize that, among the plurality of photoelectric units in a same time period, reflectivities corresponding to a plurality of first photoelectric units located in a first region are concentratedly distributed, the reflectivities corresponding to the plurality of first photoelectric units are greater than reflectivities corresponding to a plurality of second photoelectric units located in a second region outside the first region, a number of the plurality of first photoelectric units is less than a number of the plurality of second photoelectric units, and/or the second preset condition is configured to characterize a photoelectric unit region in which a reflectivity gradient change greater than a threshold.

48. The method according to any one of claims 39 to 42, **characterized in that** the determining whether the current scene is the target scene based on the reflection information of the reflective surface comprises:
in response to a proportion of signal intensities within a first interval among the signal intensities of the plurality of signals being within a first preset range, identifying the current scene to be a water surface scene; and/or
in response to a proportion of reflectivity values within a second interval among the reflectivities of the plurality of signals being with a second preset range, identifying the current scene to be a water surface scene.

49. The method according to any one of claims 39 to 44, **characterized in that** the target scene further comprises a cloud and fog scene.

50. The method according to claim 49, **characterized in that** the determining whether the current scene is the target scene based on the reflection information of the reflective surface comprises:
counting a number of the plurality of signals with signal intensities less than a seventh preset threshold to determine a number of cloud and fog points; and/or,
counting a number of the plurality of signals with reflectivities less than an eighth preset threshold to determine a number of cloud and fog points; and
in response to the number of the cloud and fog points reaching a third preset range, identifying the current scene to be a cloud and fog scene.

51. The method according to claim 50, **characterized in that** the determining whether the current scene is the target scene based on the reflection information of the reflective surface comprises:
in response to proportions of reflectivity values of the plurality of signals within different intervals satisfy a third preset condition, identifying the current scene to be a cloud and fog scene, wherein the third preset condition is configured to characterize that the reflectivity values corresponding to the plurality of signals are concentratedly distributed within a preset interval.

52. The method according to claim 51, **characterized in that** the different intervals comprise a third interval and a fourth interval, an upper limit of the third interval is less than or equal to a lower limit of the fourth interval; and
the third preset condition comprises: a proportion of reflectivities of the plurality of signals within the third interval being greater than a proportion of reflectivities of the plurality of signals within the fourth interval, and a sum of the proportions of the reflectivities of the plurality of signals within the third interval and the fourth interval being greater than a third preset proportion.

53. The method according to claim 49, **characterized in that** the identifying whether the current scene is the target scene based on the signal parameters of the plurality of signals comprises:
in response to the current scene being determined to be a non-water surface scene based on a first signal parameter of the plurality of signals, identifying whether the current scene is a cloud and fog scene based on a second signal parameter of the plurality of signals, wherein the first signal parameter is different from the second signal parameter.

54. The method according to any one of claims 39 to 48, **characterized in that** the method is applied to a movable platform, and the method further comprises:
in response to the current scene being identified as a water surface scene, controlling the movable platform to maintain hovering at a preset height above a water surface.

55. The method according to any one of claims 39 to 48, **characterized in that** the method further comprises:
obtaining visual information of the current scene collected by a visual sensor;
and
the identifying whether the current scene is the target scene based on the signal parameters of the plurality of signals comprises:
identifying whether the current scene is a water surface scene based on the visual information and the signal parameters of the plurality of signals, wherein the visual information is at least configured to exclude other specular scenes than the water surface scene.

56. The method according to any one of claims 39 to 48, **characterized in that** the method is applied to a movable platform, and the method further comprises:
in response to the current scene being determined as the target scene, outputting prompt information corresponding to the target scene.

57. The method according to any one of claims 49 to 53, **characterized in that** the method is applied to a movable platform, and the method further comprises:
in response to the current scene being determined as a cloud and fog scene, controlling the movable platform to move at an original speed, or controlling the movable platform to move at a speed lower than the original speed for a preset duration and then move at the original speed.

58. The method according to any one of claims 39 to 48, **characterized in that** the signal parameters of the plurality of signals further comprise depth information.

59. The method according to claim 58, **characterized in that** the method further comprises:
in response to the current scene being determined as a water surface scene, identifying whether there exists an above-water object and/or an underwater object in the water surface scene at least based on distribution and/or variation of depths corresponding to the plurality of signals.

60. The method according to claim 59, **characterized in that** the method is applied to a movable platform, and the method further comprises:
in response to an above-water object being identified in the water surface scene, identifying a landing position of the movable platform based on a position of the above-water object.

61. The method according to claim 58, **characterized in that** the method further comprises:
in response to the current scene being identified as a water surface scene, identifying whether there exists a wave in the water surface scene based on distribution and/or variation of depths of the plurality of signals.

62. The method according to claim 61, **characterized in that** the method is applied to a movable platform, and the method further comprises:
in response to a wave being identified in the water surface scene, controlling the movable platform to maintain a preset distance from the wave during a hovering process; or
in response to a wave being identified in the water surface scene, controlling the movable platform to maintain a preset distance from a water surface during a hovering process.

63. The method according to claim 58, **characterized in that** the current scene is a scene below the movable platform carrying the detection device.

64. The method according to claim 63, **characterized in that** the method further comprises:
outputting height information of the movable platform; the height information of the movable platform is determined based on a minimum value among depths corresponding to the plurality of signals.

65. The method according to claim 63, **characterized in that** the height information of the movable platform is determined based on a minimum value among depths corresponding to the plurality of signals and a current posture of the movable platform.

66. The method according to claim 39 or 65, **characterized in that** a field of view angle of the detection device on the movable platform is determined based on a maximum attitude angle of the movable platform.

67. The method according to claim 66, **characterized in that** the field of view angle is greater than or equal to 2 times the maximum attitude angle of the movable platform.

68. The method according to claim 58 or 59, **characterized in that** the target scene further comprises a non-flat scene.

69. The method according to claim 68, **characterized in that** the method further comprises:
identifying whether the current scene contains stairs or a slope based on depth distribution of the plurality of signals and a current attitude of the movable platform, and outputting prompt information based on an identification result.

70. The method according to claim 68, **characterized in that** the signal parameters comprise a depth corresponding to a signal; the method further comprises:
identifying whether the current scene comprises a landable airport guide groove based on depth distribution of the plurality of signals and a current attitude of the movable platform; and
in response to the current scene comprises a landable airport guide groove, controlling the movable platform to land in the guide groove.

71. The method according to any one of claims 39 to 43, **characterized in that** the target scene further comprises a low-reflectivity land scene.

72. The method according to claim 71, **characterized in that** the identifying whether the current scene is a target scene based on the signal parameters of the plurality of signals comprises:
in response to reflectivities of the plurality of signals satisfying a fourth preset condition, determining that the current scene is a low-reflectivity land scene, wherein
the fourth preset condition comprises: among the reflectivities of the plurality of signals, a proportion of reflectivity values within a fifth interval is greater than a fourth preset proportion; and/or gradient changes of the reflectivities corresponding to the plurality of signals are all less than a threshold.

73. The method according to claim 39, **characterized in that** the detection device comprises an area-array photoelectric sensor, and the echo signal of the reflective surface is received by the area-array photoelectric sensor.

74. A control device, **characterized in that** the control device comprises:
a memory for storing executable instructions;
one or more processors;
wherein the one or more processors are configured individually or collectively to, when executing the executable instructions, perform the method according to any one of claims 1 to 73.

75. A movable platform, **characterized in that** the movable platform comprises:
a body;
a drive system, mounted on the body, configured to provide power for the movable platform;
a detection device, mounted on the body, configured to emit probing light to detect a current scene; and
the control device according to claim 74.

76. The movable platform according to claim 75, **characterized in that** the detection device is disposed at a bottom of the body.

77. A computer-readable storage medium, **characterized in that** the computer-readable storage medium stores executable instructions, which, when executed by a processor, implement the method according to any one of claims 1 to 73.
